(19) Europäisches Patentamt / European Patent Office / Office européen des brevets

(11) **EP 4 600 804 A1**

(12) **EUROPEAN PATENT APPLICATION**

(43) Date of publication:
**13.08.2025 Bulletin 2025/33**

(21) Application number: **24222761.9**

(22) Date of filing: **23.12.2024**

(51) International Patent Classification (IPC):
*G06F 3/16* *(2006.01)*

(52) Cooperative Patent Classification (CPC):
**G06F 3/167**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2024 KR 20240019974**
**13.06.2024 KR 20240077175**

(71) Applicant: **LG Electronics Inc.**
**Yeongdeungpo-gu**
**Seoul 07336 (KR)**

(72) Inventors:
• **Lee, Sangseok**
**06772 Seoul (KR)**

• **Choi, Gowoon**
**06772 Seoul (KR)**
• **Lee, Seonghak**
**06772 Seoul (KR)**
• **Kim, Taejoon**
**06772 Seoul (KR)**
• **Park, Seunghye**
**06772 Seoul (KR)**
• **Park, Jeongyong**
**06772 Seoul (KR)**
• **Lee, Jungjae**
**06772 Seoul (KR)**

(74) Representative: **Vossius & Partner**
**Patentanwälte Rechtsanwälte mbB**
**Siebertstrasse 3**
**81675 München (DE)**

(54) **ELECTRONIC DEVICE AND SYSTEM INCLUDING SAME**

(57) An electronic device including a display; a network interface configured to communicate with a server; a user input interface configured to receive speech uttered by a user; and a controller configured to determine whether the speech uttered by the user is related to a user account logged in to the server, in response to determining the speech uttered by the user is unrelated to the user account logged in to the server, display a first response on the display including an indicator indicating the user who has uttered the speech is not the user logged in to the user account, and in response to determining the speech uttered by the user is related to the user account logged in to the server, display a second response on the display indicating the user who uttered the speech is currently logged in to the server.

FIG. 1

EP 4 600 804 A1

**Description**

## BACKGROUND OF THE INVENTION

**1. Field of the invention**

The present disclosure relates to an electronic device and a system including the same, and more specifically, to an electronic device that utilizes speech recognition technology and a system including the same.

**2. Description of the Related Art**

With the recent development of technology, research on speech recognition technology for processing speech is being actively conducted. In particular, research on speech recognition technology, which began with smartphones, is being conducted widely in various fields related to user convenience, such as vehicles, as well as home appliances used at home and in offices.

Speech recognition technology is commonly used when a user controls an electronic device using his or her voice. For example, when a user utters a command to control an electronic device, the electronic device may directly recognize and process user's speech and operate according to the command corresponding to the speech, or may send the speech to a server that processes speech and then operate according to a command corresponding to the speech received from the server.

Meanwhile, services or functions provided through electronic devices are becoming increasingly diverse. Additionally, users register accounts for various services and then use the services by logging in with the registered account. In this case, service providers use user information managed for each account to provide optimal functions or information tailored to the user.

Conventionally, when attempting to log in to use a service, a user needs to directly input account information, for example, an identification (ID) and/or a password of the account. However, it is inconvenient for a user to input account information one by one into various services. Additionally, if a user remains logged in to eliminate the inconvenience of inputting account information, security problems such as access to the user's account information by others may occur. Additionally, when multiple users use one electronic device together, there is a problem that multiple users need to input their account information and log in each time they use a service.

## SUMMARY OF THE INVENTION

Therefore, the present disclosure has been made in view of the above problems, and it is an object of the present disclosure to solve the above-described problems and other problems.

It is another object of the present disclosure to provide an electronic device capable of registering identification information on a user voice in a user account and a system including the same.

It is a further object of the present disclosure to provide an electronic device capable of identifying a user based on a user voice and a system including the same.

It is a further object of the present disclosure to provide an electronic device capable of allowing a user to log in to a user account identified based on user voice and a system including the same.

It is a further object of the present disclosure to provide an electronic device capable of accurately notifying a user of switching of a logged-in user account and a system including the same.

In accordance with the present disclosure, the above and other objects can be accomplished by the provision of an electronic device including a display, a network interface configured to communicate with a server, a user input interface configured to transmit a speech signal corresponding to speech uttered by a user, and a controller, wherein the controller determines whether the user who has uttered the speech is related to a user account logged in to the server, displays a first response including an indicator indicating the user who has uttered the speech through the display based on the user who has uttered the speech being unrelated to the user account logged in to the server, and displays a second response not including the indicator through the display based on the user who has uttered the speech being related to the user account logged in to the server.

In accordance with another aspect of the present disclosure, there is provided a system including an electronic device and a server, wherein the electronic device is configured to transmit data including a speech signal related to speech uttered by a user to the server, determine whether the user who has uttered the speech is related to a user account logged in to the server based on a result of processing the speech signal received from the server, display a first response including an indicator indicating the user who has uttered the speech through a display based on the user who has uttered the speech being unrelated to the user account logged in to the server, and display a second response not including the indicator through the display based on the user who has uttered the speech being related to the user account logged into the server, and the server is configured to generate identification information for the speech signal included in the data received from the electronic device, determine first identification information related to the identification information for the speech signal among identification information mapped to user identification information related to user accounts stored in a database of the server, and transmit the result of processing the speech signal including first user identification information mapped to the first identification information to the electronic device.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a diagram illustrating a system according to an embodiment of the present disclosure;
FIG. 2 is an internal block diagram of an electronic device of FIG. 1;
FIG. 3 is a diagram referenced in description of a server of FIG. 1;
FIG. 4 is a block diagram illustrating a configuration of a server according to an embodiment of the present disclosure;
FIG. 5 is a diagram illustrating an example of converting a speech signal into a power spectrum according to an embodiment of the present disclosure;
FIG. 6 is a block diagram illustrating the configuration of a controller for speech recognition and synthesis of an electronic device, according to an embodiment of the present disclosure;
FIG. 7 is a flowchart of a method of operating an electronic device according to an embodiment of the present disclosure;
FIG. 8 is a flowchart of a method of operating a system according to an embodiment of the present disclosure;
FIG. 9 to FIG. 13 are diagrams referenced in description of a process of registering identification information on a user voice in a user account according to an embodiment of the present disclosure;
FIG. 14 and FIG. 15 are flowcharts of a method of operating an electronic device according to an embodiment of the present disclosure; and
FIG. 16 to FIG. 29 are diagrams referenced in description of responses to user voice according to various embodiments of the present disclosure.

## DETAILED DESCRIPTION OF THE PREFERRED EMBODIMENTS

Hereinafter, the present disclosure will be described in detail with reference to the attached drawings. In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present disclosure, it will be further understood that the term "comprise" or "include" specifies the presence of a stated feature, figure, step, operation, component, part or combination thereof, but does not preclude the presence or addition of one or more other features, figures, steps, operations, components, or combinations thereof.

Further, in this specification, the terms "first" and/or "second" are used to describe various components, but such components are not limited by these terms. The terms are used to discriminate one component from another component.

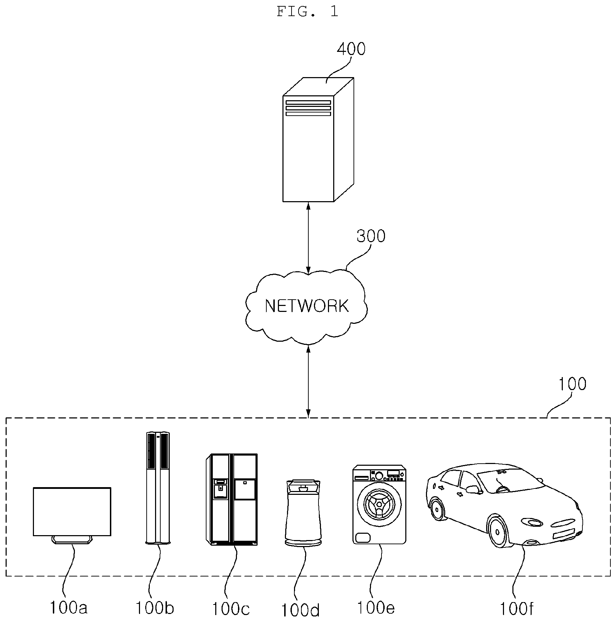

FIG. 1 is a diagram illustrating a system according to various embodiments of the present disclosure.

Referring to FIG. 1, the system 10 may include an electronic device 100 and/or a server 400.

The electronic device 100 can transmit/receive data to/from at least one server 400. For example, the electronic device 100 may transmit/receive data to/from the at least one server 400 via a network 300 such as the Internet.

According to an embodiment, the at least one server 400 may include a server that performs speech recognition, a server that processes data using a super-giant artificial intelligence model, a server that provides content, and the like.

The electronic device 100 may include an image display device 100a, an air conditioner 100b, a refrigerator 100c, an air purifier 100d, a washing machine 100e, a vehicle 100f, and the like. Although the electronic device 100 is an image display device 100a in the present disclosure, the present disclosure is not limited thereto.

The image display device 100a may be a device that processes and outputs images. The image display device 100a is not particularly limited as long as it can output a screen corresponding to video signals, such as a TV, a laptop computer, or a monitor.

The image display device 100a may receive a broadcast signal, process the same, and output a processed broadcast image. When the image display device 100a receives a broadcast signal, the image display device 100a may correspond to a broadcast reception device.

The image display device 100a may receive broadcast signals wirelessly through an antenna, or may receive broadcast signals through a cable. For example, the image display device 100a may receive terrestrial broadcast signals, satellite broadcast signals, cable broadcast signals, and Internet protocol Television (IPTV) broadcast signals.

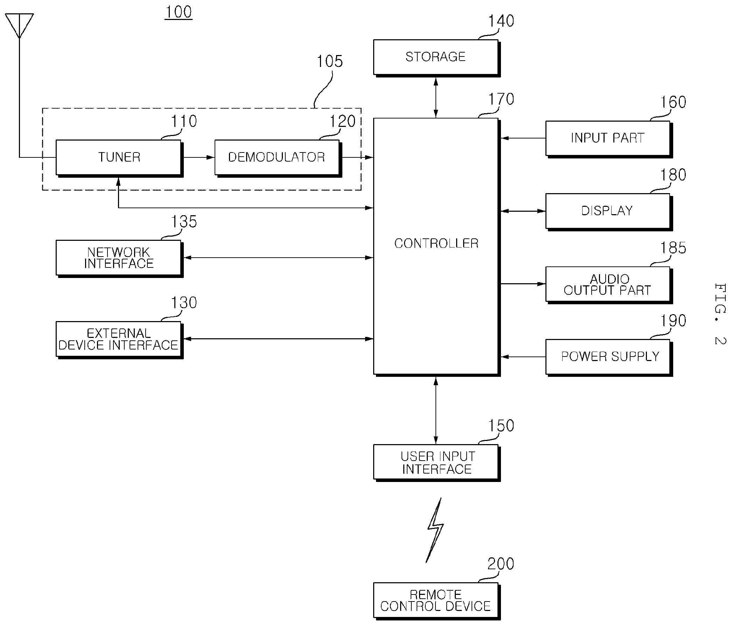

FIG. 2 is an internal block diagram of the electronic device of FIG. 1.

Referring to FIG. 2, the electronic device 100 may include a broadcast receiver 105, an external device interface 130, a network interface 135, a storage 140, a user input interface 150, an input part 160, a controller 170, a display 180, an audio output part 185, and/or a power supply 190.

The broadcast receiver 105 may include a tuner 110 and a demodulator 120.

Meanwhile, the electronic device 100 may include only the broadcast receiver 105 and the external device interface 130 among the broadcast receiver 105, the external device interface 130, and the network interface 135. That is, the electronic device 100 may not include the network interface 135.

The tuner 110 may select a broadcast signal corresponding to a channel selected by a user or broadcast signals of all previously stored channels among broadcast signals received through an antenna or a cable. The tuner 110 may convert the selected broadcast signals into intermediate frequency signals or baseband video or audio signals.

For example, if a selected broadcast signal is a digital broadcast signal, the tuner 110 may convert the selected broadcast signal into a digital IF signal (DIF), and if the selected broadcast signal is an analog broadcast signal, convert the same into an analog baseband video or audio signal (CVBS/SIF). That is, the tuner 110 can process digital broadcast signals or analog broadcast signals. The analog base band video or audio signal (CVBS/SIF) output from the tuner 110 may be directly input to the controller 170.

Meanwhile, the tuner 110 may sequentially select broadcast signals of all of stored broadcast channels through a channel memory function among received broadcast signals and convert the same into intermediate frequency signals or baseband video or audio signals.

The tuner 110 may include a plurality of tuners in order to receive broadcast signals of a plurality of channels. Alternatively, a single tuner that simultaneously receives broadcast signals of a plurality of channels may also be adopted.

The demodulator 120 may receive a digital IF signal (DIF) converted by the tuner 110 and perform a demodulation operation.

The demodulator 120 may output a stream signal TS after performing demodulation and channel decoding. Here, the stream signal may be a multiplexed video signal, audio signal, or data signal.

The stream signal output from the demodulator 120 may be input to the controller 170. After performing demultiplexing and video/audio signal processing, the controller 170 may output video through the display 180 and output audio through the audio output part 185.

The external device interface 130 may transmit/receive data to/from a connected external device. To this end, the external device interface 130 may include an A/V input/output part (not shown).

The external device interface 130 may be connected to external devices such as a digital versatile disc (DVD) player, a Blu-ray player, a game console, a camera, a camcorder, a computer (laptop), a set-top box, and the like in wired/wireless manners, and may also perform input/output operations with respect to external devices.

In addition, the external device interface 130 may establish a communication network with respect to various remote control devices 200 to receive control signals related to the operation of the electronic device 100 from the remote control devices 200 or to transmit data related to the operation of the electronic device 100 to the remote control devices 200.

The A/V input/output part may receive video and audio signals from an external device. For example, the A/V input/output part may include an Ethernet terminal, a USB terminal, a composite video banking Sync (CVBS) terminal, a component terminal, an S-video terminal (analog), a digital visual interface (DVI) terminal, a high definition multimedia interface (HDMI) terminal, a mobile high-definition link (MHL) terminal, an RGB terminal, a D-SUB terminal, an IEEE 1394 terminal, an SPDIF terminal, a liquid HD terminal, and the like. Digital signals input through these terminals may be transmitted to the controller 170. Here, analog signals input through the CVBS terminal and the S-video terminal may be converted into digital signals through an analog-to-digital converter and transmitted to the controller 170.

The external device interface 130 may include a wireless communication part for short-distance wireless communication with other electronic devices. The external device interface 130 may exchange data with a neighboring mobile terminal through the wireless communication part. For example, the external device interface 130 may receive device information, executing application information, application images, and the like from the mobile terminal in a mirroring mode.

The external device interface 130 may perform short-range wireless communication using Bluetooth, radio frequency identification (RFID), infrared data association (IrDA), ultra-wideband (UWB), ZigBee, and the like.

The network interface 135 may provide an interface for connecting the electronic device 100 to a wired/wireless network including the Internet.

The network interface 135 may include a communication module for connection to a wired/wireless network. For example, the network interface 135 may include a communication module for a wireless LAN (WLAN) (Wi-Fi), wireless broadband (WiBro), world interoperability for microwave access (WiMax), and high speed downlink packet access (HSDPA).

The network interface 135 may transmit/receive data to/from other users or other electronic devices through a connected network or another network linked to the connected network.

The network interface 135 may receive web content or data provided by content providers or network operators. That is, the network interface 135 may receive content such as movies, advertisements, games, VOD, and broadcasting and information related thereto provided from content providers or network providers through networks.

The network interface 135 may receive firmware update information and update files provided by network operators, and may transmit data to the Internet, content providers, or network operators.

The network interface 135 may select and receive a desired application from among applications open to the public through a network.

The storage 140 may store programs for processing and controlling each signal in the controller 170 and may store processed video, audio, or data signals. For example, the storage 140 may store application programs designed for the purpose of performing various tasks that can be processed by the controller 170 and selectively provide some of the stored application programs at the request of the controller 170.

Programs stored in the storage 140 are not particularly limited as long as they can be executed by the controller 170.

The storage 140 may execute a function of temporarily storing video, voice, or data signals received from an external device through the external device interface 130.

The storage 140 may store information on a predetermined broadcast channel through a channel memory function such as a channel map.

Although FIG. 2 illustrates an embodiment in which the storage 140 is provided separately from the controller 170, the scope of the present disclosure is not limited thereto, and the storage 140 may be included in the controller 170.

The storage 140 may include at least one of a volatile memory (e.g., a DRAM, an SRAM, an SDRAM, etc.) or a non-volatile memory (e.g., a flash memory, a hard disk drive (HDD), a solid-state drive (SSD), etc.). In various embodiments of the present disclosure, "storage" and "memory" may be used interchangeably.

The user input interface 150 may transmit a signal input by a user to the controller 170 or transmit a signal from the controller 170 to the user.

For example, the user input interface 150 may transmit/receives user input signals such as power on/off, channel selection, and screen settings to/from the remote control device 200, transmit user input signals input through local keys such as a power key, a channel key, a volume key, and a setting key to the controller 170, transmit a user input signal input through a sensor that senses a user's gesture to the controller 170, or transmit signals from the controller 170 to the sensor.

The input part 160 may be provided on one side of the main body of the electronic device 100. For example, the input part 160 may include a touch pad, physical buttons, and the like.

The input part 160 may receive various user commands related to the operation of the electronic device 100 and transmit control signals corresponding to the input commands to the controller 170.

The input part 160 may include at least one microphone and may receive a user voice through the microphone.

The controller 170 may include at least one processor and may control the overall operation of the electronic device 100 using the processor included therein. Here, the processor may be a general processor such as a central processing unit (CPU). The processor may be a dedicated device such as an ASIC or another hardware-based processor.

The controller 170 may demultiplex streams input through the tuner 110, the demodulator 120, the external device interface 130, or the network interface 135, or process demultiplexed signals to generate and output signals for video or audio output.

The display 180 may convert a video signal, a data signal, an OSD signal, and a control signal processed by the controller 170 or a video signal, a data signal, and a control signal received from the external device interface 130 to generate driving signals.

The display 180 may include a display panel having a plurality of pixels.

The plurality of pixels provided in the display panel may include RGB subpixels. Alternatively, the plurality of pixels provided in the display panel may include RGBW subpixels. The display 180 may convert a video signal, a data signal, an OSD signal, a control signal, etc. processed by the controller 170 to generate driving signals for the plurality of pixels.

The display 180 may be a plasma display panel (PDP), a liquid crystal display (LCD), an organic light emitting diode (OLED) display, or a flexible display, and may also be a 3D display. 3D displays 180 may be classified into a glasses-free type and a glasses type.

Meanwhile, the display 180 may be configured as a touch screen and used as an input device in addition to an output device.

The audio output part 185 receives the audio signal processed by the controller 170 and outputs the same as audio.

A video signal processed by the controller 170 may be input to the display 180 and displayed as an image corresponding to the video signal. Additionally, the video signal processed by the controller 170 may be input to an external output device through the external device interface 130.

An audio signal processed by the controller 170 may be output as sound to the audio output part 185. Additionally, the audio signal processed by the controller 170 may be input to an external output device through the external device interface 130.

Further, the controller 170 may include a demultiplexer, an image processor, etc.

In addition, the controller 170 may control overall operations of the electronic device 100. For example, the controller 170 may control the tuner 110 to select (tune to) a broadcast corresponding to a channel selected by the user or a previously stored channel.

Additionally, the controller 170 may control the electronic device 100 using a user command input through the user input interface 150 or an internal program.

Meanwhile, the controller 170 may control the display 180 to display an image. Here, the image displayed on the display 180 may be a still image or a video, and may be a 2D image or a 3D image.

Further, the controller 170 may cause a predetermined 2D object to be displayed in an image displayed on the display 180. For example, the object may be at least one of a connected web screen (newspaper, magazine, or the like), an electronic program guide (EPG), various menus, widgets, icons, a still image, a video, or text.

Meanwhile, the electronic device 100 may further include an imaging device (not shown). The imaging device may capture an image of the user. The imaging device may be implemented as a single camera, but the present disclosure is not limited thereto and the imaging device may also be implemented as a plurality of cameras. Meanwhile, the imaging device may be embedded in the electronic device 100 at the top of the display 180 or may be disposed separately. Image information captured by the imaging device may be input to the controller 170.

The controller 170 may recognize a location of the user based on images captured by the imaging device. For example, the controller 170 may ascertain the distance (z-axis coordinate) between the user and the electronic device 100. In addition, the controller 170 may ascertain the x-axis coordinate and y-axis coordinate in the display 180 corresponding to the location of the user.

The controller 170 may detect a user's gesture based on images captured by the imaging device, each signal detected by a sensor, or a combination thereof.

The power supply 190 may supply corresponding power throughout the electronic device 100. In particular, the power supply 190 may supply power to the controller 170, which can be implemented in the form of a system on chip (SOC), the display 180 for displaying images, and the audio output part 185 for audio output.

Specifically, the power supply 190 may include a converter that converts AC power to DC power and a DC/DC converter that converts a DC power level.

The remote control device 200 may transmit user input to the user input interface 150. To this end, the remote control device 200 may use Bluetooth, radio frequency (RF) communication, infrared communication, ultra-wideband (UWB), ZigBee, and the like. Additionally, the remote control device 200 may receive video, audio, or data signals output from the user input interface 150 and display the same or output the same as audio through the remote control device 200.

The electronic device 100 described above may be a stationary or mobile digital broadcast receiver capable of receiving digital broadcasting.

Meanwhile, the block diagram of the electronic device 100 shown in FIG. 2 is merely a block diagram for an embodiment of the present disclosure, and components of the block diagram may be integrated, added, or omitted according to the specifications of the electronic device 100 that is actually implemented.

That is, two or more components may be combined into one component, or one component may be subdivided into two or more components as necessary. In addition, the function executed by each block is for describing an embodiment of the present disclosure, and the specific operation or device does not limit the scope of the present disclosure.

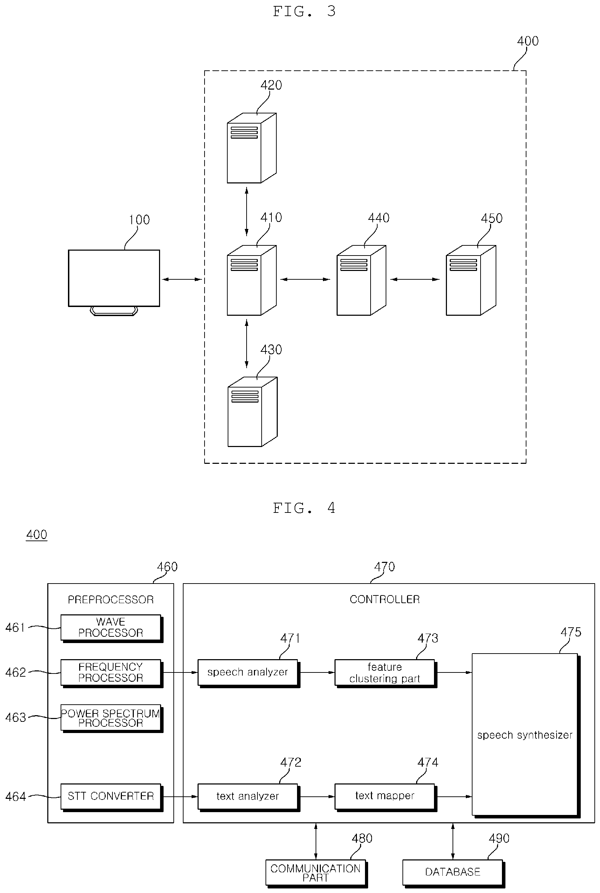

FIG. 3 is a diagram referenced in description of the server of FIG. 1.

Referring to FIG. 3, the server 400 may include a relay server 410, a speech-to-text (STT) server 420, a natural language processing (NLP) server 430, a user identification server 440, and/or an account server 450. Although the relay server 410, the STT server 420, the NLP server 430, the user identification server 440, and the account server 450 are distinguished from each other in the present disclosure, the present disclosure is not limited thereto. For example, two or more of the relay server 410, the STT server 420, the NLP server 430, the user identification server 440, and the account server 450 may be configured as one server.

The relay server 410 may communicate with the electronic device 100. The relay server 410 may transmit data between the STT server 420, the NLP server 430, the user identification server 440, and the electronic device 100. The relay server 410 may store at least some data transmitted between the STT server 420, the NLP server 430, the user identification server 440, and the electronic device 100.

The STT server 420 may receive speech data. The STT server 420 may convert the speech data into text data. The STT server 420 may transmit the text data to the electronic device 100 via the relay server 410. The STT server 420 may be called an automatic speech recognition (ASR) server.

The STT server 420 may increase the accuracy of speech-to-text conversion using a language model. A language model may refer to a model that can calculate the probability of a sentence or the probability of the next word appearing when previous words are provided. For example, the language model may include probabilistic language models such as Unigram model, Bigram model, and N-gram model. That is, the STT server 420 may determine whether text data has been appropriately converted from speech data, and accordingly, increase the accuracy of conversion to text data.

The NLP server 430 may receive text data. The NLP server 430 may perform intent analysis on the text data based on the received text data. The NLP server 430 may transmit intent analysis information indicating the result of intent analysis to the electronic device 100 via the relay server 410.

According to an embodiment, the NLP server 430 may generate intent analysis information by sequentially performing a morpheme analysis step, a syntax analysis step, a speech-act analysis step, a conversation processing step, and the like on text data. The morpheme analysis step is a step of classifying text data corresponding to speech uttered by a user into morpheme units, which are the smallest units with meaning, and determining to what part of speech each classified morpheme corresponds. The syntax analysis step is a step of classifying text data into noun phrases, verb phrases, adjective phrases, and the like using the results of the morpheme analysis step and determining what kind of relationship is present between the classified phrases. Through the syntax analysis step, subjects, objects, and modifiers of speech uttered by a user can be determined. The speech-act analysis step is a step of analyzing the intention of speech uttered by a user using the results of the syntax analysis step. Specifically, the speech-act analysis step is a step of determining the intention of a sentence, such as whether a user is asking a question, making a request, or simply expressing an emotion. The conversation processing step is a step of determining whether to reply to user's utterance, respond thereto, or ask a question for additional information.

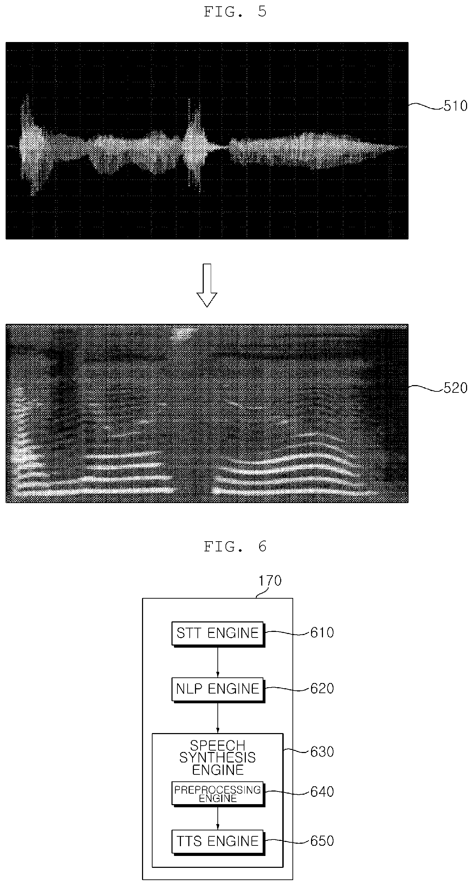

The user identification server 440 may receive voice data. The user identification server 440 may extract voice features based on the voice data. Here, the voice features may include the waveform of the voice, the frequency band of the voice, the power spectrum of the voice, and the like. Extraction of voice features will be described later with reference to FIG. 4 and FIG. 5.

The user identification server 440 may obtain a voice feature vector from the voice features. The user identification server 440 may obtain the voice feature vector from the voice features based on a linear predictive coefficient, cepstrum, Mel frequency cepstral coefficient (MFCC), and filter bank energy.

The user identification server 440 may determine a similarity between a plurality of feature vectors. The user identification server 440 may determine the similarity between the plurality of feature vectors using cosine similarity, Euclidean similarity, or the like. Although an example of calculating a similarity between a first voice input and a second voice input based on cosine similarity will be described in the present disclosure, the method of determining a similarity is not limited thereto. For example, a first vector corresponding to first text and a second vector corresponding to second text may be created. A cosine similarity between the first vector and the second vector may be calculated based on Formula 1 below.

[Formula 1]

$$cos(\Theta) = \frac{A \cdot B}{\|A\| \, \|B\|} = \frac{\sum_{i=1}^{n} A_i \times B_i}{\sqrt{\sum_{i=1}^{n}(A_i)^2} \times \sqrt{\sum_{i=1}^{n}(B_i)^2}}$$

Here, A·B indicates the dot product of two vectors, an ||A|| and ||B|| indicate the magnitudes of the two vectors. That is, cosine similarity can be calculated by dividing the dot product of two vectors by the product of the magnitudes of the vectors. Cosine similarity can range from -1 to 1, and two vectors are determined to be similar as the cosine similarity therebetween is closer to 1.

The user identification server 440 may determine whether users who have uttered speech are the same based on the similarity between a plurality of feature vectors. For example, when a similarity between a first feature vector corresponding to the first voice input and a second feature vector corresponding to the second voice input is equal to or greater than a predetermined standard, the user identification server 440 may determine that the user who has uttered the first voice input and the user who has uttered the second voice input are the same.

According to an embodiment, the user identification server 440 may obtain a vector by processing a voice feature vector using an algorithm such as the Gaussian mixture model (GMM), supervector, i-vector, d-vector, x-vector, or the like. The user identification server 440 may determine whether users who have uttered voices are the same based on a similarity between a first vector obtained by processing a first feature vector and a second vector obtained by processing a second feature vector.

The user identification server 440 may store voice data. The user identification server 440 may store data on voiceprint (hereinafter, voiceprint information). Here, voiceprint information may include a voice feature vector and/or a vector obtained by processing the voice feature vector.

The user identification server 440 may store a voice database. The voice database regarding voices may include unique identification information corresponding to the electronic device 100 (hereinafter referred to as device identification information), unique identification information corresponding to a user account (hereinafter referred to as user identification information), voice data mapped to user identification information, voiceprint information mapped to user identification information.

The device identification information, user identification information, voice data, and voiceprint information included in the voice database may be stored in the user identification server 440 in association with one another. For example, at least one piece of device identification information, a plurality of pieces of voice data, and/or a plurality of pieces of voiceprint information may be mapped to user identification information. That is, it can be interpreted that device identification information, voice data, and voiceprint information are mapped to a user account and stored in the user identification server 440. In the present disclosure, an example in which a plurality of pieces of voice data and a plurality of pieces of voiceprint information are all mapped to user identification information included in the voice database will be described.

The user identification server 440 may update voiceprint information included in a voice database based on voice data included in the voice database. For example, the user identification server 440 may generate voiceprint information corresponding to voice data included in the voice database using an algorithm different from a previously used algorithm. Here, the user identification server 440 may change the voiceprint information included in the voice database to the newly generated voiceprint information.

The account server 450 may manage data regarding user accounts. The account server 450 may manage user account IDs, passwords, user identification information, device identification information mapped to user accounts, and whether or not users agree to terms and conditions related to various functions.

The account server 450 may store a database regarding user accounts. The database regarding user accounts may include user account IDs, passwords, user identification information, device identification information mapped to the user accounts, registration dates and times of the user accounts, whether or not users agree to terms and conditions related to various functions, and dates and times when users agree to the terms and conditions.

The account server 450 may communicate with the electronic device 100. For example, the account server 450 may create and register a user account based on data from the electronic device 100. For example, the account server 450 may approve login of a user account based on an ID and a password received from the electronic device 100.

FIG. 4 is a block diagram for describing the configuration of the server according to an embodiment of the present disclosure.

Referring to FIG. 4, the server 400 may include a preprocessor 460, a controller 470, a communication interface 480, and/or a database 490.

The preprocessor 460 may preprocess speech received through the communication interface 480 or speech stored in the database 490.

The preprocessor 460 may be implemented as a separate chip from the controller 470 or may be implemented as a chip included in the controller 470.

The preprocessor 460 may receive a voice signal (uttered by a user) and filter noise signals from the voice signal before converting the received voice signal into text data.

If the preprocessor 460 is provided in the electronic device 100, the preprocessor 460 may recognize a startup word for activating speech recognition of the electronic device 100. The preprocessor 460 may convert the startup word received through the user input interface 150 into text data, and if the converted text data is text data corresponding to a prestored startup word, determine that the startup word is recognized.

The preprocessor 460 may convert the noise-removed voice signal into a power spectrum.

A power spectrum may be a parameter that indicates a frequency component included in a temporally varying waveform of a voice signal and the magnitude of the frequency component.

A power spectrum shows a distribution of squared amplitude values according to the frequency of the waveform of a voice signal. This will be described with reference to FIG. 5.

FIG. 5 is a diagram illustrating an example of converting a voice signal into a power spectrum according to an embodiment of the present disclosure.

FIG. 5 shows a voice signal 510. The voice signal 510 may be a signal received from an external device or may be a signal previously stored in the memory 140.

The x-axis of the voice signal 510 represents time, and the y-axis represents amplitude.

A power spectrum processor 463 may convert the voice signal 510 in which the x-axis is the time axis into a power spectrum 520 in which the x-axis is the frequency axis. The power spectrum processor 463 may convert the voice signal 510 into the power spectrum 520 using Fast Fourier transform (FFT). The x-axis of the power spectrum 520 represents frequency, and the y-axis represents the square of amplitude.

Referring back to FIG. 4, the functions of the preprocessor 460 and the controller 470 described in FIG. 4 may also be performed in the NLP server 430.

The preprocessor 460 may include a wave processor 461, a frequency processor 462, the power spectrum processor 463, a speech-to-text (STT) converter 464, and the like.

The wave processor 461 may extract the waveform of speech.

The frequency processor 462 may extract the frequency band of the speech.

The power spectrum processor 463 may extract the power spectrum of the speech.

A power spectrum may be a parameter that indicates, when a temporally varying waveform is given, a frequency component included in the waveform and the magnitude of the frequency component.

The STT converter 464 may convert speech into text. The STT converter 464 may convert speech in a specific language into text in that language.

The controller 470 may control the overall operation of the server 400. The controller 470 may include a speech analyzer 471, a text analyzer 472, a feature clustering part 473, a text mapper 474, and/or a speech synthesizer 475.

The speech analyzer 471 may extract speech characteristic information using one or more of the waveform of speech, the frequency band of the speech, and the power spectrum of the speech preprocessed in the preprocessor 460. The speech characteristic information may include one or more of information on the sex of a speaker, the voice (or tone) of the speaker, the pitch of voice, the speaking style of the speaker, the speech rate of the speaker, and the emotion of the speaker. Additionally, the speech characteristic information may further include the timbre of the speaker.

The text analyzer 472 may extract main expressions from text converted by the STT converter 464. Upon detecting a change in tone between phrases from the converted text, the text analyzer 472 may extract the phrase with a different tone as a main expression phrase. The text analyzer 472 may determine that the tone has changed when the frequency band between phrases has changed more than a preset band. The text analyzer 472 may extract key words from phrases in the converted text. A key word may be a noun present in a phrase, but this is merely an example.

The feature clustering part 473 may classify the speech type of the speaker using the speech characteristic information extracted by the speech analyzer 471. The feature clustering part 473 may classify the speech type of the speaker by assigning a weight to each type item constituting the speech characteristic information. The feature clustering part 473 may classify the speech type of the speaker using an attention technique of a deep learning model.

The text mapper 474 may translate text converted into a first language into text in a second language. The text mapper 474 may map the text translated into the second language with the text in the first language. The text mapper 474 may map main expressions constituting the text in the first language to corresponding phrases in the second language. The text mapper 474 may map a speech type corresponding to the main expressions constituting the text in the first language to phrases in the second language. This is for the purpose of applying the classified speech type to the phrases in the second language.

The speech synthesizer 475 may apply the speech type and speaker's tone classified by the feature clustering part 473 to the main expressions of the text translated into the second language in the text mapper 474 to generate synthetic speech.

The controller 470 may determine the speech characteristics of the user using one or more of the transmitted text data or the power spectrum 520.

Speech characteristics of a user may include the sex, pitch, tone, speech topic, speech rate, and voice volume of the user.

The controller 470 may obtain the frequency of the voice signal 510 and the amplitude corresponding to the frequency.

The controller 470 may determine the sex of the user who has uttered the voice using the frequency band of the power spectrum 470. For example, if the frequency band of the power spectrum 520 is within a preset first frequency band range, the controller 470 may determine that the user is male.

If the frequency band of the power spectrum 520 is within a preset second frequency band range, the controller 470 may determine that the user is female. Here, the second frequency band range may be higher than the first frequency band range.

The controller 470 may determine the pitch of voice using the frequency band of the power spectrum 520. For example, the controller 470 may determine the pitch of the voice based on the amplitude within a specific frequency band.

The controller 470 may determine the user's tone using the frequency band of the power spectrum 520. For example, the controller 470 may determine a frequency band with an amplitude equal to or greater than a certain level among the frequency bands of the power spectrum 520 as a main sound range of the user and determine this main sound range as the user's tone.

The controller 470 may determine the user's speech rate based on the number of syllables uttered per unit time from the converted text data.

The controller 470 may determine the topic of the user's speech using the Bag-Of-Word Model technique for the converted text data.

The Bag-Of-Word Model technique is a technique of extracting frequently used words based on the frequency of a word in a sentence. Specifically, the Bag-Of-Word Model technique is a technique of extracting unique words within a sentence and expressing the frequency of each extracted word as a vector to determine the features of the topic of speech. For example, if words such as "running" and "physical strength" appear frequently in text data, the controller 470 may classify the topic of the user's speech as exercise.

The controller 470 may determine the topic of the user's speech from the text data using a known text categorization technique. The controller 470 may extract keywords from the text data and determine the topic of the user's speech.

The controller 470 may determine the user's voice volume by considering amplitude information in the entire frequency band. For example, the controller 470 may determine the user's voice volume based on the average or weighted average of amplitudes in each frequency band of the power spectrum 470.

The communication interface 480 may communicate with an external server by wire or wirelessly. The communication interface 480 may communicate with the electronic device 100 by wire or wirelessly.

The database 490 may store speech in first language included in content. The database 490 may store synthetic speech in which speech in the first language has been converted into speech in the second language. The database 490 may store first text corresponding to speech in the first language and second text in which the first text has been translated into the second language. The database 490 may store various learning models required for speech recognition.

Meanwhile, the controller 170 of the electronic device 100 illustrated in FIG. 2 may include the preprocessor 460 and the controller 470 illustrated in FIG. 4. That is, the controller 170 of the electronic device 100 may perform the functions of the preprocessor 460 and the controller 470.

Next, FIG. 6 is a block diagram illustrating a configuration of a controller for speech recognition and synthesis of an image display device according to an embodiment of the present disclosure.

That is, the speech recognition and synthesis process illustrated in FIG. 6 may be performed by the controller 170 of the electronic device 100 without using the server.

Referring to FIG. 6, the processor 170 of the electronic device 100 may include an STT engine 610, an NLP engine 620, and a speech synthesis engine 630. Each engine may be either hardware or software.

The STT engine 610 may perform the function of the STT server 420 of FIG. 5. That is, the STT engine 610 may convert voice data into text data.

The NLP engine 620 may perform the function of the NLP server 430 shown in FIG. 5. That is, the NLP engine 620 may obtain intent analysis information indicating the speaker's intention from the converted text data.

The speech synthesis engine 630 may perform a function of a speech synthesis server. The speech synthesis engine 630 may search a database for syllables or words corresponding to given text data and synthesize a combination of the searched syllables or words to generate synthetic speech.

The speech synthesis engine 630 may include a preprocessing engine 631 and a TTS engine 632.

The preprocessing engine 631 may preprocess text data before generating synthetic speech. Specifically, the preprocessing engine 631 performs tokenization to divide text data into tokens, which are meaningful units. After performing tokenization, the preprocessing engine 631 may perform a cleansing operation to remove unnecessary characters and symbols to eliminate noise. Thereafter, the preprocessing engine 631 may generate the same word token by integrating word tokens with different expression methods. Thereafter, the preprocessing engine 631 may remove meaningless word tokens (stopwords).

The TTS engine 632 may synthesize speech corresponding to the preprocessed text data and generate synthetic speech.

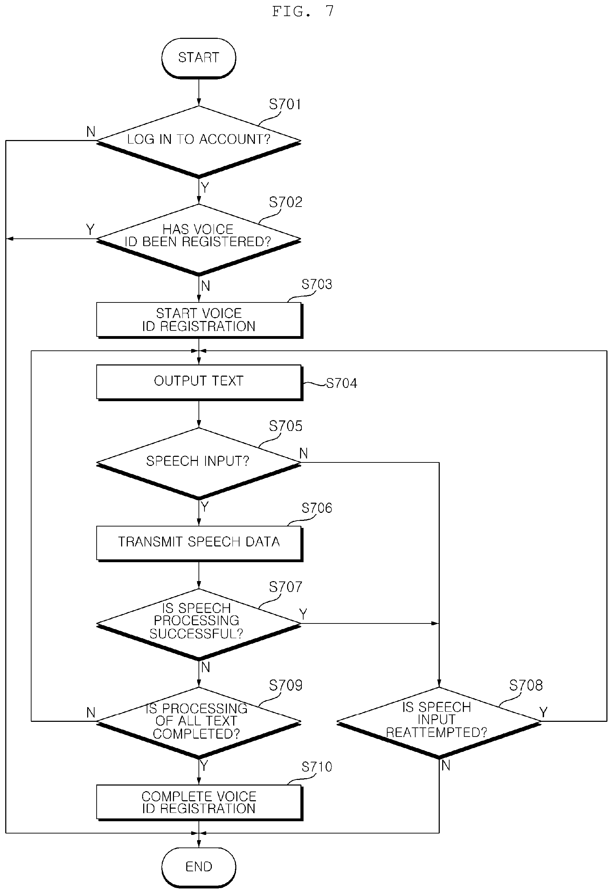

FIG. 7 is a flowchart of a method of operating an electronic device according to an embodiment of the present disclosure.

Referring to FIG. 7, the electronic device 100 may determine whether a user account is logged in to the server 400 in operation S701. For example, a user may log in to the server 400 with a user account by entering the user account ID and password.

According to an embodiment, when the user first logs in to the server 400 using the electronic device 100 with the user account, the electronic device 100 may include user identification information corresponding to the user account in a user list. For example, when three different user accounts log in to the server 400 using the electronic device 100, the user list stored in the electronic device 100 may include three different pieces of user identification information.

In operation S702, the electronic device 100 may determine whether voice-related identification information (hereinafter referred to as voice ID) is registered with respect to the user account logged in to the server 400. Here, the voice ID may include voiceprint information stored in the user identification server 440. For example, the server 400 may transmit information on whether a voice ID has been registered with respect to the user account logged in to the server 400 to the electronic device 100.

According to an embodiment, the server 400 may determine whether the voice ID has been registered based on whether voiceprint information has been mapped to user identification information, which is unique identification information corresponding to the user account logged in to the server 400. Here, when the voice ID has not been registered with respect to the user account, the number of pieces of voiceprint information mapped to the user identification information may be 0.

According to an embodiment, the server 400 may determine that the voice ID has been registered if the number of pieces of voiceprint information mapped to the user identification information is two or more predetermined numbers and determine that the voice ID has not been registered if the number of pieces of voiceprint information is less than the predetermined numbers. For example, in the case of a user account for which a voice ID has been registered, six different pieces of voiceprint information may be mapped to user identification information. For example, in the case of a user account for which a voice ID has not been registered, five or fewer voiceprint information may be mapped to user identification information.

According to an embodiment, a flag value indicating whether a voice ID has been registered may be mapped to user identification information stored in the server 400. Here, user identification information to which a flag value is mapped may be stored in the user identification server 440 and/or the account server 450. The server 400 may determine whether the voice ID has been registered based on the flag value mapped to the user identification information. For example, a flag value mapped to user identification information may be 0 in the case of a user account for which a voice ID has not been registered, and a flag value mapped to user identification information may be 1 in the case of a user account for which a voice ID has been registered.

When the voice ID has not been registered with respect to the user account, the electronic device 100 may start a process of registering the voice ID in operation S703. For example, when starting the process of registering the voice ID, the electronic device 100 may transmit data containing the device identification information, the user identification information, a value indicating the start of registration of the voice ID, etc. to the server 400.

The electronic device 100 may output preset text in operation S704. The electronic device 100 may output any one of a plurality of pieces of preset text. For example, when the electronic device 100 is the image display device 100a, the electronic device 100 may output preset text through the display 180.

According to an embodiment, the server 400 may transmit any one of a plurality of pieces of preset text to the electronic device 100 in a preset order. Here, the electronic device 100 may output the preset text received from the server 400.

The electronic device 100 may determine whether speech with respect to the preset text is input in operation S705. For example, the electronic device 100 may determine whether speech is input through a microphone included in the input part 160 within a preset time. Here, the voice signal corresponding to the speech input through the microphone may be transmitted to the controller 170 through the user input interface 150. For example, the electronic device 100 may determine whether data containing a voice signal corresponding to speech uttered by the user is received from the remote control device 200 within a preset time.

When speech with respect to the preset text is input, the electronic device 100 may transmit voice data including the voice signal corresponding to the speech to the server 400 in operation S706. Here, the electronic device 100 may transmit the device identification information, the user identification information, and a language code indicating the type of language to the server 400 along with the voice data.

The server 400 may convert the voice signal included in the voice data received from the electronic device 100 into text. The server 400 may determine whether the text converted from the voice signal and the preset text correspond to each other. For example, the server 400 may determine whether the text converted from the voice signal and the preset text correspond to each other based on the similarity therebetween.

The server 400 may generate voiceprint information corresponding to the voice signal when the text converted from the voice signal and the preset text correspond to each other. The server 400 may map the voiceprint information generated with respect to the preset text to the user identification information and store the same. The server 400 may map the voice data received with respect to the preset text to the user identification information and store the same.

The electronic device 100 may determine whether speech processing for the preset text is successful based on the response received from the server 400 in operation S707. For example, if the text converted from the voice signal and the preset text correspond to each other, the server 400 may notify the electronic device 100 of success of speech processing. For example, when the voiceprint information corresponding to the voice signal has been generated, the server 400 may notify the electronic device 100 of success of speech processing.

Meanwhile, in operation S708, the electronic device 100 may determine whether the user re-attempts to input speech when speech with respect to the preset text is not input or when speech processing for the preset text fails. For example, the electronic device 100 may re-attempt to input speech based on a user input from the user re-attempting to input speech. Here, the electronic device 100 may output the preset text again.

In operation S709, if speech processing for the preset text is successful, the electronic device 100 may determine whether processing for all pieces of text is completed. For example, if all speech processing for six pieces of text is successful, processing for all pieces of text can be completed. Meanwhile, when processing for five pieces of preset text is completed, the electronic device 100 may output the last preset text.

The electronic device 100 may end the process of registering the voice ID when processing for all pieces of text is completed in operation S710. For example, when the electronic device 100 is the image display device 100a, the electronic device 100 may output a screen indicating completion of voice ID registration through the display 180. For example, the electronic device 100 may transmit data indicating completion of voice ID registration to the account server 450.

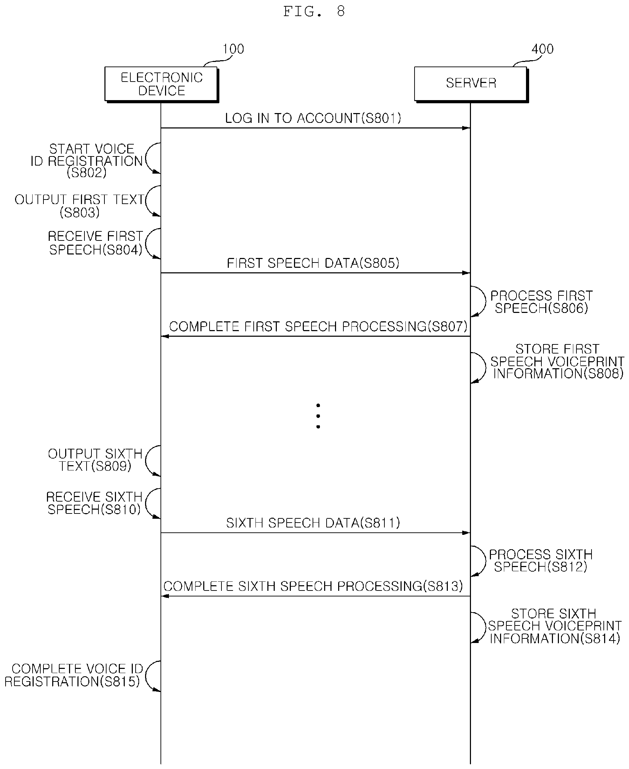

FIG. 8 is a flowchart of a method of operating a system according to an embodiment of the present disclosure.

Referring to FIG. 8, the electronic device 100 may log in to the server 400 using a user account in operation S801.

The electronic device 100 may start a process of registering a voice ID in operation S802.

The electronic device 100 may output first text among a plurality of pieces of preset text in operation S803.

The electronic device 100 may receive first speech for the first text in operation S804.

The electronic device 100 may transmit first speech data including a speech signal corresponding to the first speech to the server 400 in operation S805.

The server 400 may process the first speech for the first text based on the first speech data received from the electronic device 100 in operation S806. The server 400 may convert the speech signal corresponding to the first speech included in the first speech data received from the electronic device 100 into text. The server 400 may determine whether the text converted from the speech signal corresponding to the first speech and the first text correspond to each other.

The server 400 may notify the electronic device 100 of completion of processing for the first speech in operation S807. For example, the server 400 may notify the electronic device 100 of success of processing for the first speech based on the fact that the text converted from the speech signal corresponding to the first speech corresponds to the first text.

Further, the server 400 may generate first voiceprint information with respect to the first speech based on the speech signal corresponding to the first speech based on the fact that the text converted from the speech signal corresponding to the first speech corresponds to the first text.

The server 400 may store the first speech data and the first voiceprint information with respect to the first speech in operation S808. The server 400 may map the first speech data and first voiceprint information to the user identification information corresponding to the logged-in user account and store the same.

The electronic device 100 may output the second to fifth pieces of text in stages. The electronic device 100 may sequentially receive second to fifth speeches corresponding to the second to fifth pieces of text. The electronic device 100 may sequentially transmit second to fifth pieces of speech data corresponding to the second to fifth speeches to the server 400.

The server 400 may process the second to fifth speeches based on the second to fifth pieces of speech data received from the electronic device 100. Additionally, the server 400 may sequentially generate and store second to fifth pieces of speech information corresponding to the second to fifth speeches.

The electronic device 100 may output sixth text from among a plurality of pieces of preset text in operation S809.

The electronic device 100 may receive sixth speech with respect to the sixth text in operation S810.

The electronic device 100 may transmit sixth speech data including a speech signal corresponding to the sixth speech to the server 400 in operation S811.

The server 400 may process the sixth speech with respect to the sixth text based on the sixth speech data received from the electronic device 100 in operation S812. The server 400 may convert a speech signal corresponding to the sixth speech included in the sixth speech data received from the electronic device 100 into text. The server 400 may determine whether the text converted from the speech signal corresponding to the sixth speech and the sixth text correspond to each other.

The server 400 may notify the electronic device 100 of completion of processing for the sixth speech in operation S813.

Meanwhile, when the text converted from the speech signal corresponding to the sixth speech and the sixth text correspond to each other, the server 400 may generate sixth voiceprint information regarding the sixth speech based on the speech signal corresponding to the sixth speech.

The server 400 may store the sixth speech data and the sixth voiceprint information regarding the sixth speech in operation S814. The server 400 may map the sixth speech data and the sixth voiceprint information to the user identification information corresponding to the logged-in user account and store the same. Here, six different pieces of speech data and a plurality of pieces of voiceprint information may be mapped to the user identification information corresponding to the logged-in user account.

The electronic device 100 may end the process of registering the voice ID in operation S815. For example, the electronic device 100 may end the process of registering the voice ID based on completion of processing for the six different pieces of preset text.

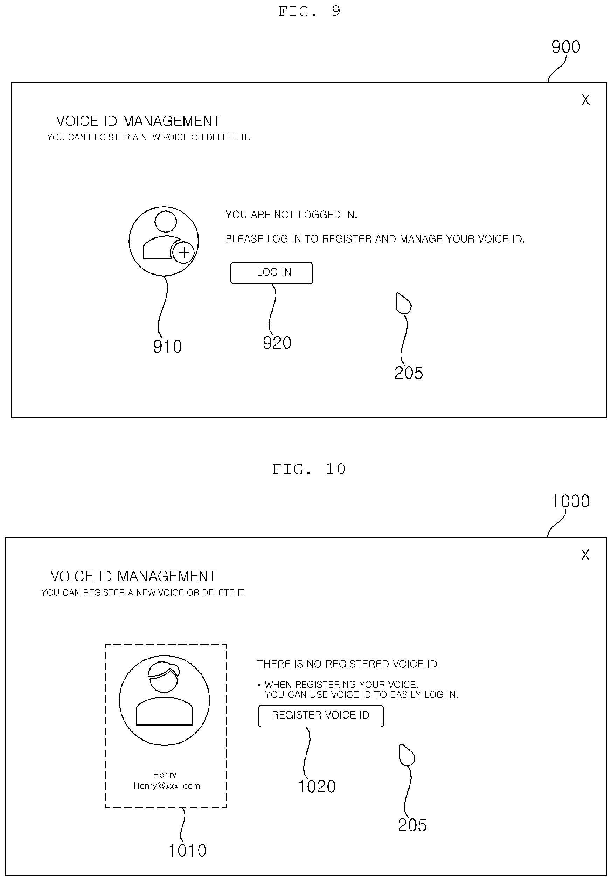

Referring to FIG. 9, if the user account is not logged in to the server 400, the electronic device 100 may output a login screen 900 related to logging in to the server 400 through the display 180. The login screen 900 may include an object 910 indicating a non-login state, and a login object 920 for executing login. When the user selects the login object 920 using a pointer 205 corresponding to the remote control device 200, the electronic device 100 may output a screen for entering an ID and a password. Here, the user can log in to the server 400 with the user account by entering the ID and the password of the user account.

Referring to FIG. 10, when the voice ID has not been registered in the user account logged in to the server 400, the electronic device 100 may output a first account screen 1000 corresponding to the user account for which the voice ID has not been registered. The first account screen 1000 may include an object 1010 indicating a logged-in user account, and an object 1020 regarding voice ID registration. When the user selects the object 1020 regarding voice ID registration using the pointer 205, the electronic device 100 may start the process of registering a voice ID.

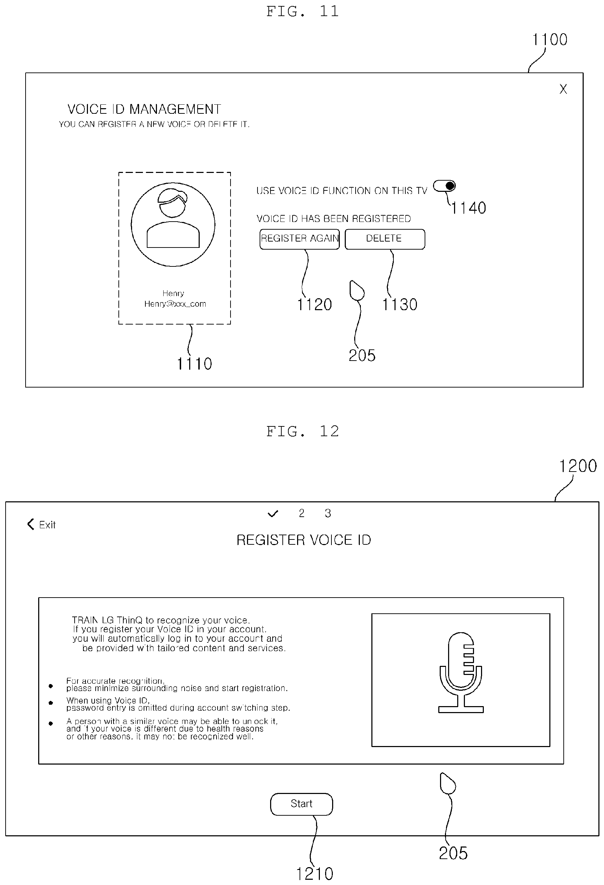

Referring to FIG. 11, when a voice ID has been registered in a user account logged in to the server 400, the electronic device 100 may display a second account screen 1100 corresponding to the user account for which the voice ID has been registered. The second account screen 1100 may include an object 1110 indicating a logged-in user account, a re-registration object 1120 regarding voice ID re-registration, a deletion object 1130 regarding voice ID deletion, and an activation object 1140 regarding the use of a function related to voice ID. The user may select the activation object 1140 using the pointer 205 to activate or deactivate the use of a function related to voice ID.

Referring to FIG. 12, when the object 1020 regarding voice ID registration is selected on the first account screen 1000, or when the re-registration object 1120 is selected on the second account screen 1100, the electronic device 100 may output a start screen 1200 for starting voice ID registration. When the user selects a start object 1210 using the pointer 205, the electronic device 100 may output a text screen for displaying preset text.

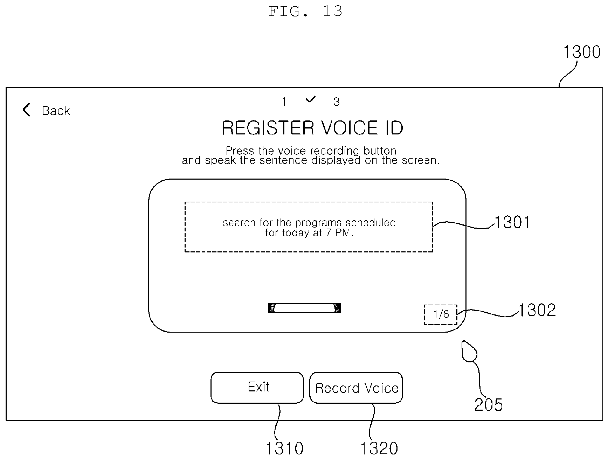

Referring to FIG. 13, the electronic device 100 may output a text screen 1300 for displaying any one of a plurality of pieces of preset text. The text screen 1300 may include preset text 1301, a text sequence number 1302, an end object 1310 for ending the process of registering a voice ID, and an input object 1320 for receiving speech.

When the user selects the end object 1310 using the pointer 205, the process of registering a voice ID may end. For example, when the process of registering a voice ID ends, all data stored in the server 400 while the process of registering a voice ID is in progress may be deleted.

When the user selects the input object 1320 using the pointer 205, the electronic device 100 may receive speech with respect to text.

According to an embodiment, when the user presses a predetermined button (e.g., a voice input button) included in the remote control device 200 while the text screen 1300 is displayed, the electronic device 100 may receive speech with respect to text based on the user input of pressing the predetermined button, received from the remote control device 200.

Meanwhile, according to an embodiment, when the user presses a predetermined button (e.g., the voice input button) included in the remote control device 200 while the process of registering a voice ID is in progress, the electronic device 100 may stop the process of registering a voice ID based on the user input of pressing the predetermined button, received from the remote control device 200. Here, the user input of pressing a predetermined button (e.g., the voice input button) included in the remote control device 200 may correspond to a user input of starting speech recognition for speech received through the remote control device 200. The electronic device 100 may perform an operation related to speech recognition on speech data including a speech signal received from the remote control device 200.

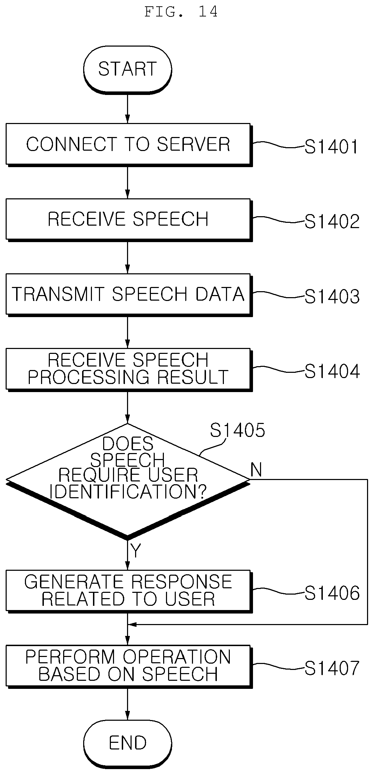

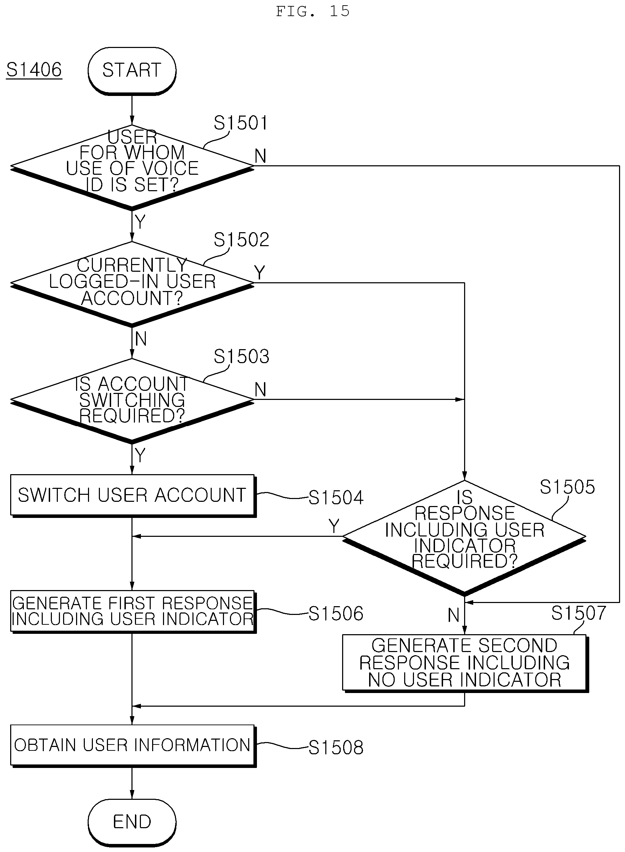

FIG. 14 and FIG. 15 are flowcharts of a method of operating the electronic device according to an embodiment of the present disclosure.

Referring to FIG. 14, the electronic device 100 may connect to the server 400 through the network interface 135 in operation S1401.

The electronic device 100 may receive speech in operation S1402. For example, the electronic device 100 may receive speech through a microphone included in the input part 160. Here, the speech signal corresponding to the speech input through the microphone may be transmitted to the controller 170 through the user input interface 150. For example, the electronic device 100 may receive data containing a speech signal corresponding to speech uttered by the user from the remote control device 200.

When speech is input in operation S1403, the electronic device 100 may transmit speech data corresponding to the input speech to the server 400. Here, the electronic device 100 may transmit the device identification information, a user list, and a language code indicating a type of language to the server 400 along with the speech data.

The electronic device 100 may receive the result of speech processing from the server 400 in operation S1404. For example, the result of speech processing may include text corresponding to the speech, intent analysis information that is the result of performing natural language processing on the speech, and user identification information corresponding to the speech.

The server 400 may generate voiceprint information with respect to the speech input to the electronic device 100 based on the speech data received from the electronic device 100. The server 400 may search a database with respect to speech for voiceprint information (hereinafter referred to as candidate voiceprint information) corresponding to user identification information included in the user list received from the electronic device 100. The server 400 may determine whether the candidate voiceprint information and the generated voiceprint information correspond to each other. The server 400 may determine user identification information to which candidate voiceprint information corresponding to the generated voiceprint information is mapped among candidate voiceprint information as the user identification information corresponding to the speech input to the electronic device 100. If there is no candidate voiceprint information corresponding to the generated voiceprint information, the server 400 may determine that user identification information corresponding to the speech input to the electronic device 100 is not present.

The server 400 may transmit the result of processing the speech data received from the electronic device 100 to the electronic device 100. For example, the server 400 may transmit, to the electronic device 100, text converted from the speech data received from the electronic device 100, intent analysis information representing the result of intent analysis performed on the converted text, user identification information corresponding to the speech, and presence or absence of user identification information corresponding to the speech.

In operation S1405, the electronic device 100 may determine whether the input speech requires user identification based on the result of speech processing.

According to an embodiment, the electronic device 100 may determine whether the input speech requires user identification based on the type of command corresponding to the speech. For example, the electronic device 100 may determine that the input speech requires user identification based on the input speech corresponding to a command related to the user account (e.g., user account login, user account switching, or the like). For example, the electronic device 100 may determine that the input speech requires user identification based on the input speech corresponding to a command (e.g., content search, content recommendation, speech recommendation, external device connection, or the like) using user information such as a usage history, a viewing history, and preferred genres. For example, the electronic device 100 may determine that the input speech does not require user identification based on the input speech corresponding to a command for checking general information (e.g., time, weather, etc.) unrelated to the user. For example, the electronic device 100 may determine that the input speech does not require user identification based on the input speech corresponding to a command for adjusting settings (e.g., volume, screen brightness, etc.) of the electronic device 100.

According to an embodiment, the electronic device 100 may determine whether the input speech requires user identification based on the type of application corresponding to the speech. For example, the electronic device 100 may determine that the input speech requires user identification based on the input speech corresponding to an application (e.g., an over-the-top media service (OTT service), a social network service (SNS), or the like) linked to the user account. For example, the electronic device 100 may determine that the input speech does not require user identification based on the input speech corresponding to an application (e.g., terrestrial broadcasting, weather, or the like) that is not linked to the user account.

In operation S1406, the electronic device 100 may generate a response related to the user when the input speech requires user identification. For example, when the input speech requires user identification, the electronic device 100 may generate a response including an indicator (hereinafter referred to as a user indicator) indicating the user who has uttered the speech based on user identification information corresponding to the speech included in the speech processing result. Additionally, the electronic device 100 may output a response including a user indicator. Here, the user indicator may include the user's name, nickname, an icon, a photo, and the like corresponding to the user identification information. The user indicator may be stored in the electronic device 100 and/or the server 400.

According to an embodiment, when the input speech requires user identification, the electronic device 100 may determine whether to generate a first response including a user indicator or a second response that does not include a user indicator. This will be described with reference to FIG. 15.

Referring to FIG. 15, the electronic device 100 may determine whether the user who has uttered speech is a user preset to use a voice ID based on user identification information corresponding to the speech in operation S1501. For example, the electronic device 100 may store information on whether use of a voice ID-related function is activated for each piece of user identification information included in the user list. Here, if the use of the voice ID-related function is activated for the user identification information corresponding to the speech included in the speech processing result, the electronic device 100 may determine that the user who has uttered the speech is a user preset to use the voice ID.

If there is no user identification information corresponding to the speech based on the speech processing result, the electronic device 100 may determine that the user who has uttered the speech is not a user preset to use the voice ID.

If the user who has uttered the speech is a user preset to use the voice ID, the electronic device 100 may determine whether the user who has uttered the speech corresponds to the currently logged-in user account in operation S1502. For example, if the user identification information corresponding to the speech corresponds to the user identification information corresponding to the currently logged-in user account, the electronic device 100 may determine that the user who has uttered the speech corresponds to the currently logged-in user account.

If the user who has uttered the speech does not correspond to the currently logged-in user account, the electronic device 100 may determine whether switching of the user account is necessary in operation S1503. The electronic device 100 may determine whether switching of the user account is necessary based on intent analysis information included in the speech processing result. If there is no user account currently logged in to the server 400, the electronic device 100 may determine that switching of the user account is necessary.

According to an embodiment, the electronic device 100 may determine whether switching of the user account is necessary based on the type of command corresponding to the speech. For example, the electronic device 100 may determine that switching of the user account is necessary based on the input speech corresponding to a command related to the user account (e.g., login, user account switching, or the like). For example, the electronic device 100 may determine that user account switching is necessary based on the input speech corresponding to a command for executing an application (e.g., OTT service, SNS, or the like) linked to the user account. For example, the electronic device 100 may determine that user account switching is necessary based on the input speech corresponding to a command (e.g., content search, content recommendation, speech recommendation, external device connection, or the like) using information on the user such as a usage history, a viewing history, and preferred genres.

In operation S1504, the electronic device 100 may switch the user account logged in to the server 400 when it is necessary to switch the currently logged-in user account. For example, the electronic device 100 may log out the currently logged-in first user account. Upon completion of logging out of the first user account, the electronic device 100 may log in to the server 400 with a second user account corresponding to the user identification information corresponding to the speech. The electronic device 100 may switch the user account after completion of generation and output of the first response.

The electronic device 100 may determine whether generation of the first response including a user indicator is necessary when the user who has uttered the speech corresponds to the currently logged-in user account or when switching of the user account is unnecessary in operation S1505. For example, the electronic device 100 may determine that generation of the first response is necessary when the input speech requires information on the user who has uttered the speech based on the intent analysis information included in the speech processing result.

The electronic device 100 may generate the first response including a user indicator in operation S1506. For example, the electronic device 100 may generate text (hereinafter referred to as response text) in response to the input speech based on the intent analysis information included in the speech processing result. Here, the electronic device 100 may generate text including both the response text and the user name as the first response.

The electronic device 100 may generate a second response that does not include a user indicator in operation S1507.

The electronic device 100 may obtain information on the user in operation S1508. For example, the electronic device 100 may obtain a usage history stored in the storage 140 in relation to the user of the currently logged-in user account. For example, the electronic device 100 may obtain the name, nickname, icon, photo, age, sex, preferred genre, and the like stored in the server 400 in relation to the currently logged-in user account.

According to an embodiment, the electronic device 100 may generate the first response or the second response after obtaining information on the user.

Referring back to FIG. 14, the electronic device 100 may perform an operation according to the speech in operation S1407. For example, when the input speech requires user identification, the electronic device 100 may output either the first response or the second response. For example, the electronic device 100 may output the second response when the input speech does not require user identification.

The electronic device 100 may perform an operation according to a command corresponding to the input speech based on the intent analysis information included in the speech processing result.

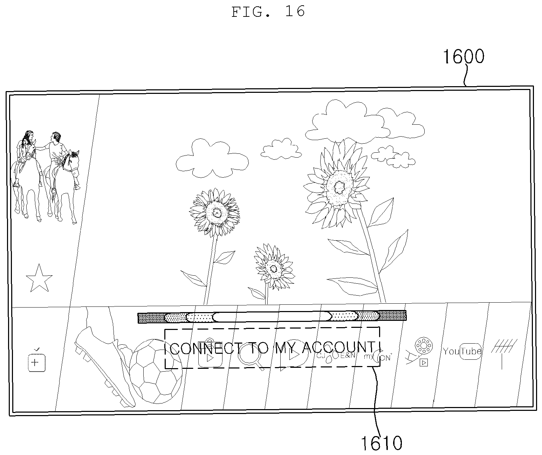

Referring to FIG. 16, the electronic device 100 may output a first home screen 1600. The first home screen 1600 may be displayed while logged in to the server 400 with a first user account. Alternatively, the first home screen 1600 may be displayed when no user account is logged in to the server 400.

Upon receiving speech uttered by a user, the electronic device 100 may output text 1610 corresponding to the speech uttered by the user based on the result of processing the speech received from the server 400. The electronic device 100 may determine that the speech uttered by the user corresponds to a command related to the user account based on the speech processing result received from the server 400.

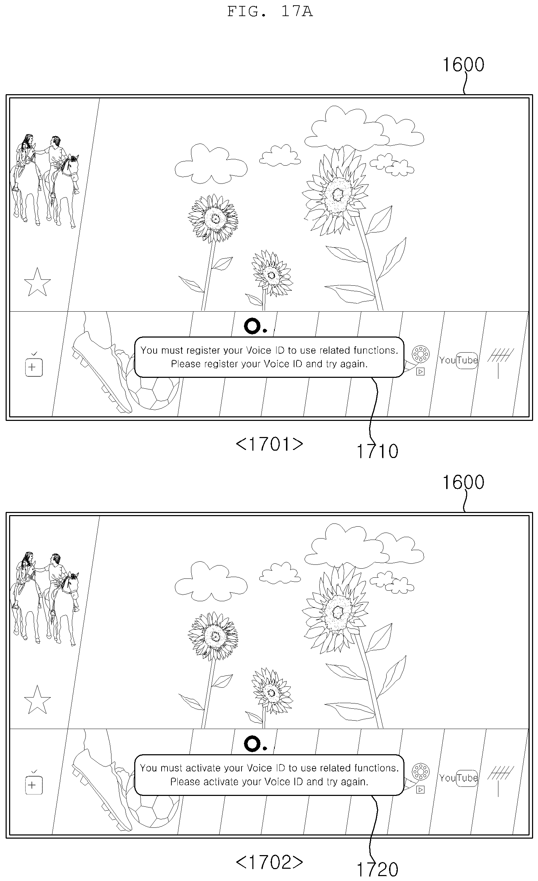

Referring to reference numeral 1701 in FIG. 17A, if a voice ID has not been registered in the user account of the user who has uttered the speech, user identification information corresponding to the speech processing result received from the server 400 may not be present. In this instance, the electronic device 100 may output a second response 1710 that requests registration of a voice ID and does not include a user indicator based on the fact that there is no user identification information corresponding to the speech uttered by the user.

Referring to reference numeral 1702 in FIG. 17A, when a voice ID has been registered in the user account of the user who has uttered the speech and the use of the voice ID-related function is deactivated, the electronic device 100 may output a second response 1720 that does not include a user indicator and requests activation of use of the voice ID-related function.

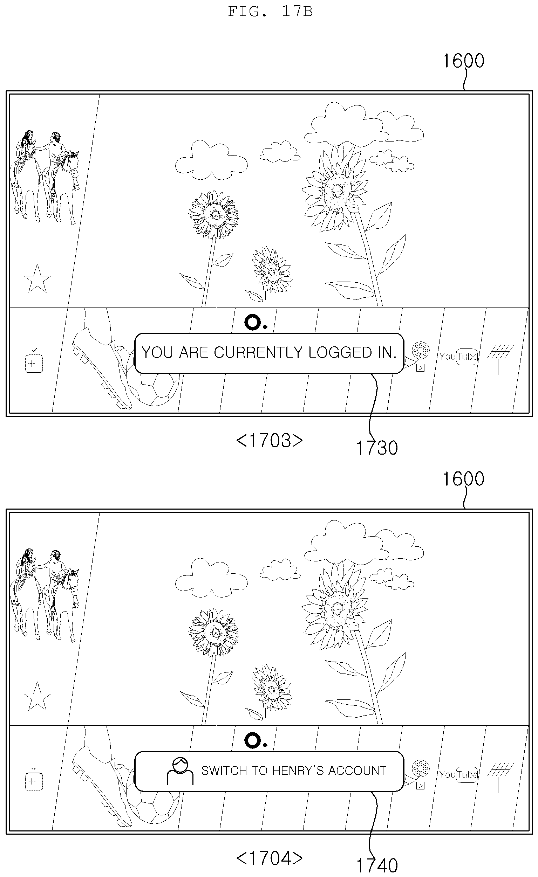

Referring to reference numeral 1703 in FIG. 17B, a voice ID may be registered in the user account of the user who has uttered the speech, and use of the voice ID-related function may be activated. Additionally, the user who has uttered the speech may correspond to the currently logged-in first user account. In this instance, the electronic device 100 may output a second response 1730 that does not include a user indicator and indicates that the user account of the user who has uttered the speech is currently logged in.

Referring to reference numeral 1704 in FIG. 17B, a voice ID may be registered in the user account of the user who has uttered the speech, and use of the voice ID-related function may be activated. Additionally, the user who has uttered the speech may not correspond to the currently logged-in first user account. In this instance, the electronic device 100 may output a first response 1740 that includes a user indicator and indicates that login is performed with the user account of the user who has uttered the speech.

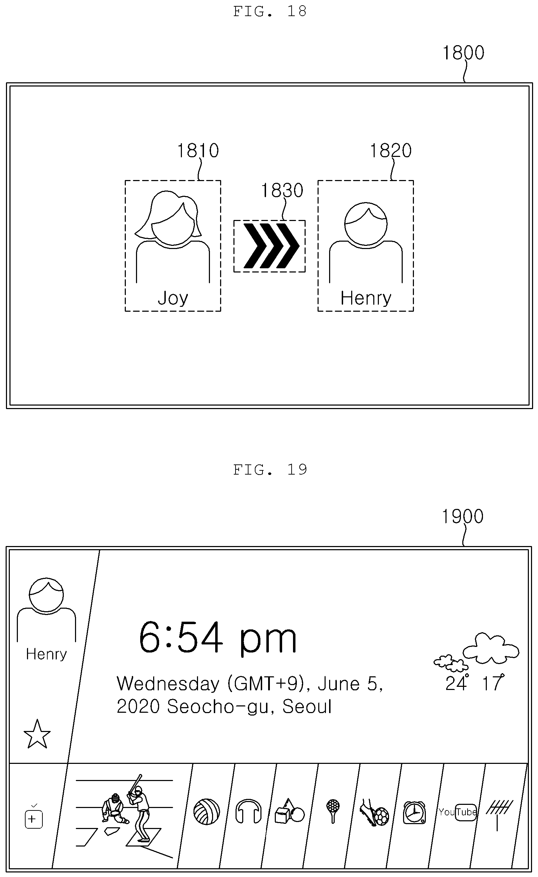

Referring to FIG. 18, the electronic device 100 may switch the user account logged in to the server 400 from the currently logged-in first user account to a second user account of the user who has uttered the speech. For example, the electronic device 100 may log out of the currently logged-in first user account and then log in to the server 400 using the second user account of the user who has uttered the speech.

During switching between user accounts, the electronic device 100 may output a user switching screen 1800 related to user switching. The user switching screen 1800 may include an object 1810 indicating the first user account, an object 1820 indicating the second user account, and an object 1830 indicating user account switching.

Referring to FIG. 19, the electronic device 100 may output a second home screen 1900 corresponding to the second user account while logged in with the second user account. The second home screen 1900 may be different from the first home screen 1600. That is, the style of the home screen output from the electronic device 100, for example, the types, number, and arrangement of objects included in the home screen, may be different for each user account.

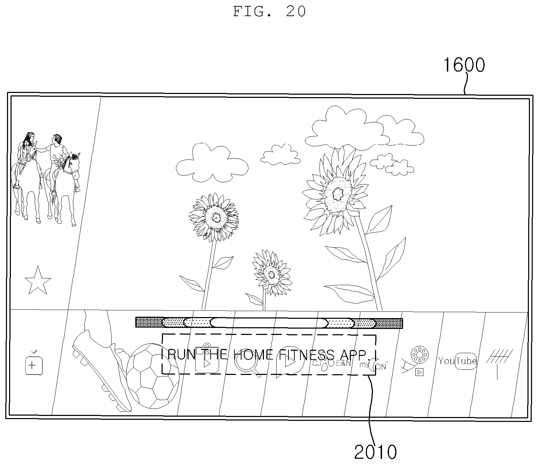

Referring to FIG. 20, the electronic device 100 may output the first home screen 1600. Upon receiving speech uttered by a user, the electronic device 100 may output text 2010 corresponding to the speech uttered by the user based on the result of processing the speech received from the server 400. The electronic device 100 may determine that the speech uttered by the user corresponds to a command for executing an exercise application based on the speech processing result received from the server 400. Here, the exercise application may be an application linked to the user account.

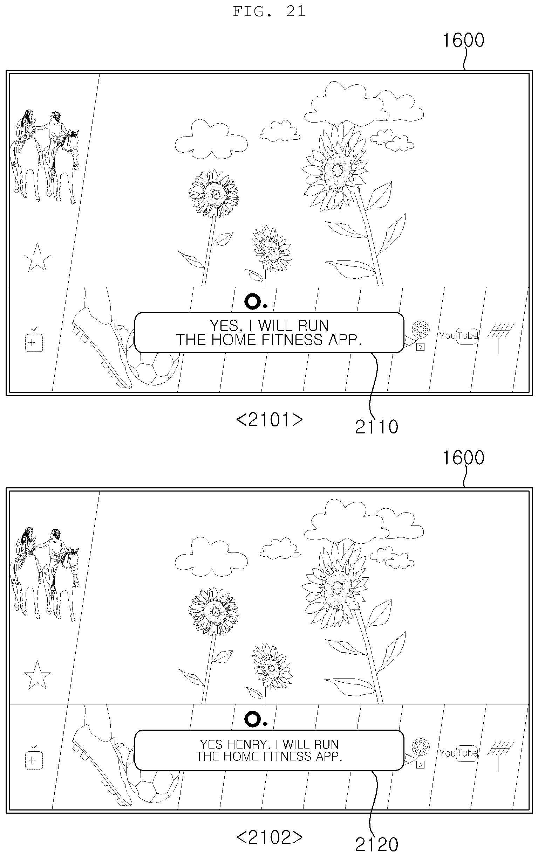

Referring to reference numeral 2101 in FIG. 21, the electronic device 100 may output a second response 2110 that does not include a user indicator and indicates execution of the exercise application. For example, if a voice ID has not been registered in the user account of the user who has uttered the speech, the user who has uttered the speech is not a user preset to use a voice ID, or the user who has uttered the speech corresponds to the currently logged-in first user account, the electronic device 100 may output a second response 2110 that does not include a user indicator.

In this instance, the electronic device 100 may execute the exercise application without logging in to the user account for the server 400 or without user account switching.

Referring to reference numeral 2102 in FIG. 21, the electronic device 100 may output a first response 2120 that includes a user indicator and indicates execution of the exercise application. For example, when the second user account is different from the currently logged-in first user account in a case in which use of the voice ID-related function is activated for the second user account of the user who has uttered the speech, the electronic device 100 may output the first response 2120 including a user indicator.

In this instance, the electronic device 100 may switch the user account logged in to the server 400 from the currently logged-in first user account to the second user account of the user who has uttered the speech. Additionally, the electronic device 100 may execute the exercise application while logged in with the second user account.

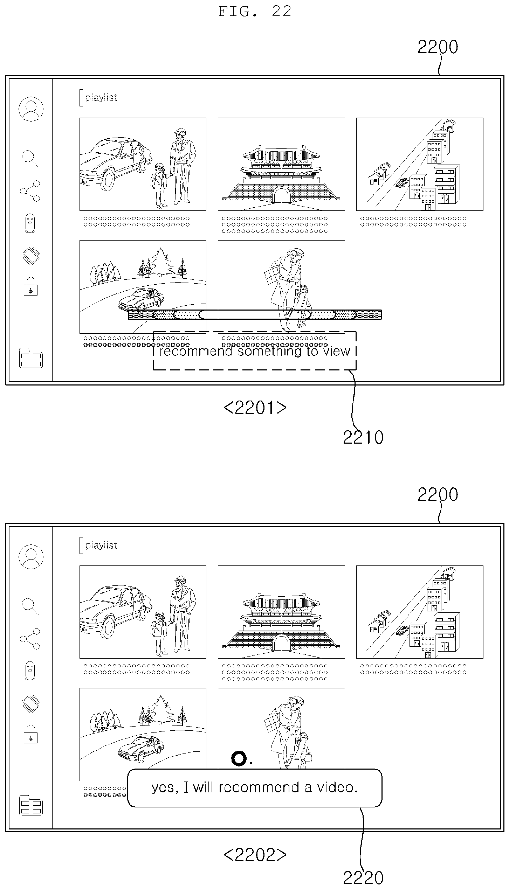

Referring to reference numeral 2201 in FIG. 22, when an OTT service application is executed, the electronic device 100 may output an OTT service screen 2200 corresponding to an OTT service. Here, the OTT service application may be an application linked to the user account.

When the electronic device 100 receives speech uttered by a user while the OTT service screen 2200 is displayed, the electronic device 100 may output text 2210 corresponding to the speech uttered by the user based on the result of processing the speech received from the server 400.

The electronic device 100 may determine that the speech uttered by the user corresponds to a command for recommending video content based on the speech processing result received from the server 400. Here, the command for recommending video content may be a command that uses information on the user.

Referring to reference numeral 2202 in FIG. 22, the electronic device 100 may output a second response 2220 that does not include a user indicator and indicates recommendation of video content.

For example, when a voice ID has not been registered in the user account of the user who has uttered the speech, the user who has uttered the speech is not a user preset to use a voice ID, or the user who has uttered the speech corresponds to the currently logged-in first user account, the electronic device 100 may output the second response 2220 that does not include a user indicator.

For example, even if use of the voice ID-related function is activated for the second user account of the user who has uttered the speech, the second user account is different from the currently logged-in first user account, and the uttered speech corresponds to the command for recommending video content, the electronic device 100 may determine that user account switching is unnecessary when an application linked to the user account is executed. That is, when an application linked to the user account is executed, it may be determined that user account switching is unnecessary, except for certain commands such as commands related to the user account or commands for executing applications linked to the user account.

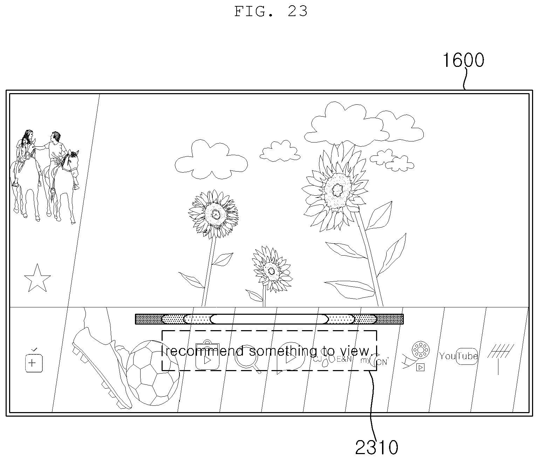

Referring to FIG. 23, the electronic device 100 may output the first home screen 1600. Upon receiving speech uttered by a user, the electronic device 100 may output text 2310 corresponding to the speech uttered by the user based on the result of processing the speech received from the server 400.

The electronic device 100 may determine that the speech uttered by the user corresponds to a command for recommending video content based on the speech processing result received from the server 400. The command for recommending video content may be a command using information on the user.

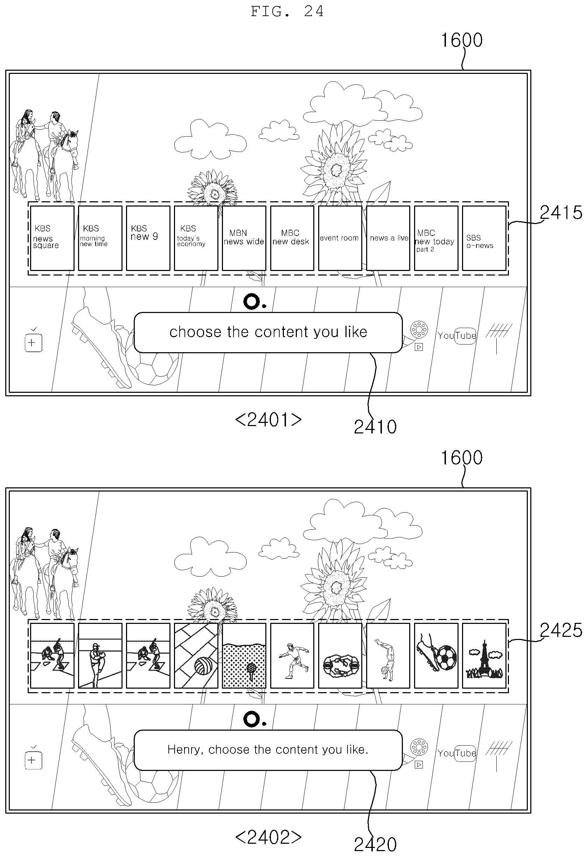

Referring to reference numeral 2401 in FIG. 24, the electronic device 100 may output a second response 2410 that does not include a user indicator and notifying of recommendation of video content. For example, if the user who has uttered the speech is a user preset to use a voice ID, and the user who has uttered the speech corresponds to the currently logged-in first user account, the electronic device 100 may output the second response including no user indicator.

The electronic device 100 may obtain information on the user of the first user account from the storage 140 and/or the server 400. The electronic device 100 may output a recommended content list 2415 corresponding to the user of the first user account based on the information on the user obtained in response to the first user account. For example, if a history of viewing news content is stored in the storage 140 of the electronic device 100 or the preferred genre is set to news in the server 400 in relation to the user of the first user account, the recommended content list 2415 corresponding to the user of the first user account may include news content.

Referring to reference numeral 2402 in FIG. 24, if use of the voice ID-related function is activated for the second user account of the user who has uttered the speech and the second user account is different from the currently logged-in first user account, the electronic device 100 may switch the user account logged in to the server 400 from the currently logged-in first user account to the second user account of the user who has uttered the speech. Additionally, the electronic device 100 may output a first response 2420 that includes a user indicator and notifies of recommendation of video content.

The electronic device 100 may obtain information on the user of the second user account from the storage 140 and/or the server 400. The electronic device 100 may output a recommended content list 2425 corresponding to the user of the second user account based on the information on the user obtained in response to the second user account. For example, if a history of viewing sports content is stored in the storage 140 of the electronic device 100 or the preferred genre is set to sports in the server 400 in relation to the user of the second user account, the recommended content list 2425 corresponding to the user of the second user account may include sports content.

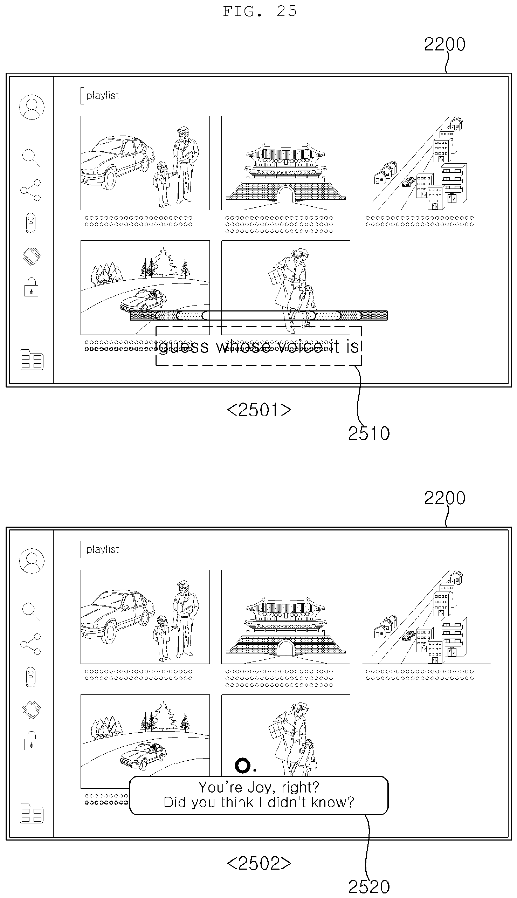

Referring to reference numeral 2501 in FIG. 25, the electronic device 100 may output an OTT service screen 2200 corresponding to the OTT service. Upon receiving speech uttered by a user while the OTT service screen 2200 is displayed, the electronic device 100 may output text 2510 corresponding to the speech uttered by the user based on the result of processing the speech received from the server 400. The electronic device 100 may determine that the speech uttered by the user is speech requesting information on the user who has uttered the speech based on the speech processing result received from the server 400.

Referring to reference numeral 2502 in FIG. 25, the electronic device 100 may output a first response 2520 that includes a user indicator and indicates the user who has uttered the speech.

For example, the electronic device 100 may output the first response 2520 including a user indicator based on that fact that the user who has uttered the speech does not correspond to the currently logged-in user account, the command for identifying the user corresponds to a type of command that does not require user account switching, and the speech uttered by the user requests information on the user who has uttered the speech.

For example, when the user who has uttered the speech corresponds to the currently logged-in user account, the electronic device 100 may output the first response 2520 including the user indicator based on the fact that the speech uttered by the user requires information on the user who has uttered the speech.

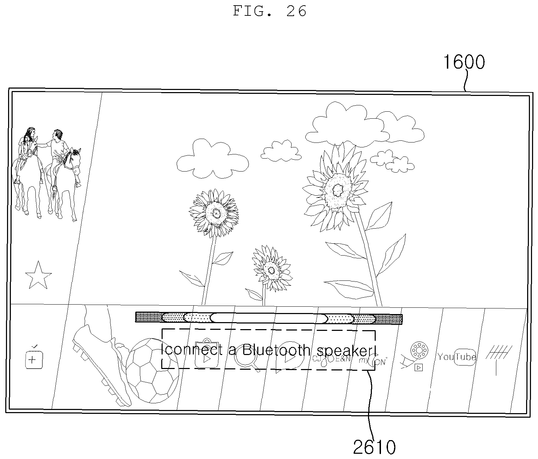

Referring to FIG. 26, the electronic device 100 may output the first home screen 1600. Upon receiving speech uttered by a user, the electronic device 100 may output text 2610 corresponding to the speech uttered by the user based on the result of processing the speech received from the server 400.

The electronic device 100 may determine that the speech uttered by the user corresponds to a command for connecting a speaker among external devices based on the speech processing result received from the server 400. The command for connecting an external device may be a command using the information on the user.

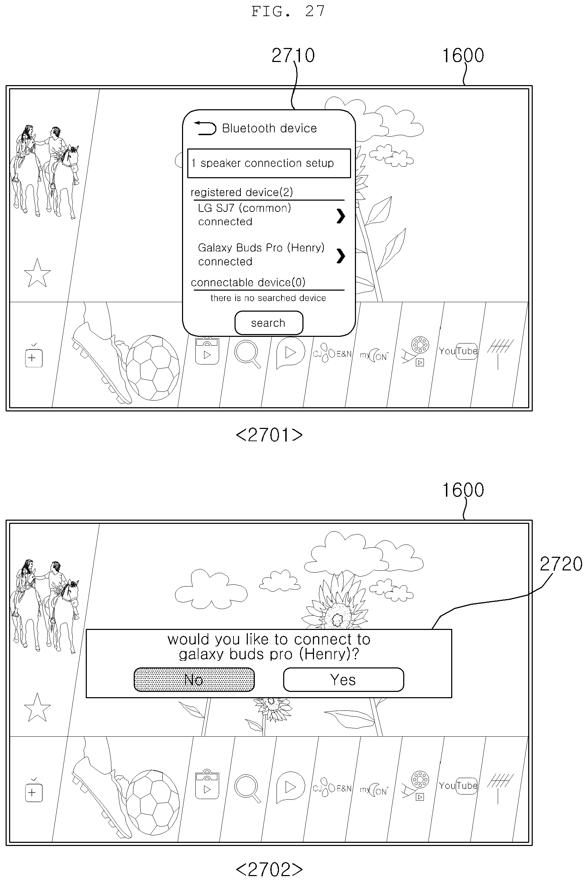

Referring to reference numeral 2701 in FIG. 27, the electronic device 100 may output a pop-up screen 2710 for a speaker that has been registered in the electronic device 100.

For example, when a voice ID has not been registered in the user account of the user who has uttered the speech, or use of the voice ID-related function is disabled for the user account of the user who has uttered the speech, the electronic device 100 may display the pop-up screen 2710 for a speaker that has been registered in the electronic device 100.

For example, when use of the voice ID-related function is activated for the user account of the user who has uttered the speech, and at least one of speakers that have been registered in the electronic device 100 is set for public use, the electronic device 100 100 may display the pop-up screen 2710 for a speaker that has been registered in the electronic device 100. Here, if the second user account of the user who has uttered the speech is different from the currently logged-in first user account, the electronic device 100 may switch the user account logged in to the server 400 from the currently logged-in first user account to the second user account of the user who has uttered the speech.

Referring to reference numeral 2702 in FIG. 27, the electronic device 100 may output a pop-up screen 2720 for the speaker corresponding to the user who has uttered the speech. For example, when the use of the voice ID-related function is activated for the user account of the user who has uttered the speech, and all speakers that have been registered in the electronic device 100 are set for personal use, the electronic device 100 may display the pop-up screen 2720 for the speaker corresponding to the user who has uttered the speech. Here, if the second user account of the user who has uttered the speech is different from the currently logged-in first user account, the electronic device 100 may switch the user account logged in to the server 400 from the currently logged-in first user account to the second user account of the user who has uttered the speech.

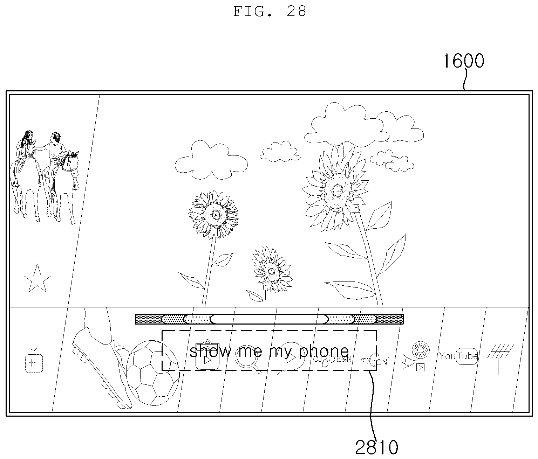

Referring to FIG. 28, the electronic device 100 may output the first home screen 1600. Upon receiving speech uttered by a user, the electronic device 100 may output text 2810 corresponding to the speech uttered by the user based on the result of processing the speech received from the server 400.

The electronic device 100 may determine that the speech uttered by the user corresponds to a command for connecting a terminal of the user who has uttered the speech among external devices based on the speech processing result received from the server 400. The command for connecting an external device may be a command using the information on the user.

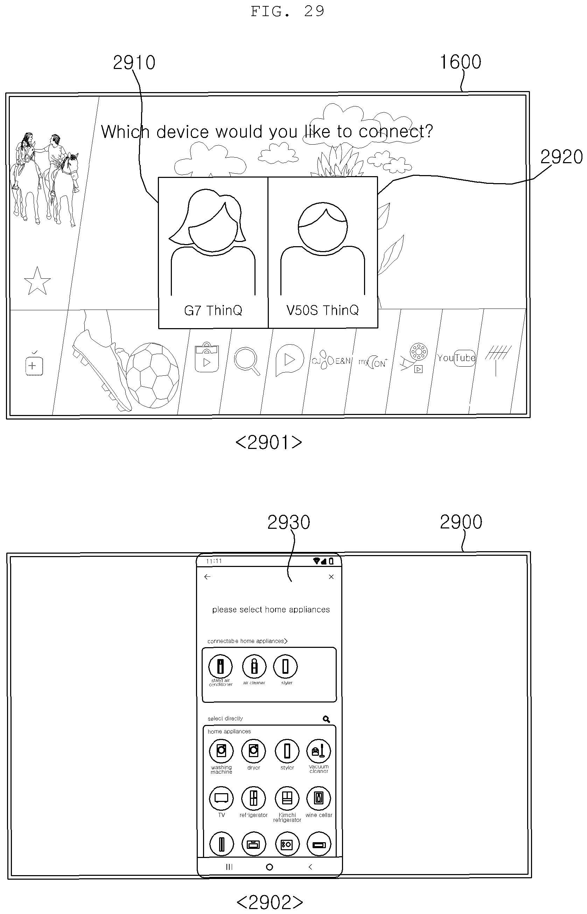

Referring to reference numeral 2901 in FIG. 29, the electronic device 100 may output pop-up screens 2910 and 2920 for terminals that have been registered in the electronic device 100.

For example, when a voice ID has not been registered in the user account of the user who has uttered the speech, or the use of the voice ID-related function is disabled for the user account of the user who has uttered the speech, the electronic device 100 may display the pop-up screens 2910 and 2920 for terminals that have been registered in the electronic device 100.

Referring to reference numeral 2902 in FIG. 29, the electronic device 100 may output a screen 2900 corresponding to a terminal of the user who has uttered the speech. The screen 2900 corresponding to the terminal of the user who has uttered the speech may include an object 2930 corresponding to the screen of the terminal of the user who has uttered the speech.

For example, when the use of the voice ID-related function is activated for the user account of the user who has uttered the speech, and the user who has uttered the speech corresponds to the currently logged-in first user account, the electronic device 100 may display the screen 2900 corresponding to the terminal of the user who has uttered the speech without switching between user accounts for the server 400.

For example, when the use of the voice ID-related function is activated for the second user account of the user who has uttered the speech, and the second user account is different from the currently logged-in first user account, the electronic device 100 may switch the user account logged in to the server 400 from the currently logged-in first user account to the second user account of the user who has uttered the speech. Additionally, after logging in with the second user account, the electronic device 100 may display the screen 2900 corresponding to the terminal of the user who has uttered the speech.

As described above, according to at least one embodiment of the present disclosure, identification information on user voice may be registered in a user account. Additionally, according to at least one embodiment of the present disclosure, a user may be identified based on user voice.

It is possible to log in to an account of a user identified based on user voice.

Additionally, according to at least one embodiment of the present disclosure, it is possible to accurately notify the user of switching of a logged-in user account.

Referring to FIGS. 1 to 29, the electronic device 100 according to an aspect of the present disclosure includes the display 180, the network interface 135 that communicates with the server 400, the user input interface 150 that transmits a speech signal related to speech uttered by a user, and the controller 170, wherein the controller 170 determines whether the user who has uttered the speech related to a user account logged in to the server 400, outputs a first response including an indicator indicating the user who has uttered the speech through the display 180 based on the user who has uttered the speech being unrelated to the user account logged in to the server 400, and outputs a second response not including the indicator through the display 180 based on the user who has uttered the speech being related to the user account logged in to the server 400.

In addition, according to one aspect of the present disclosure, the electronic device further includes the memory 140 that stores a user list including at least one piece of user identification information related to a user account with a history of logging in to the server 400, and the controller 170 may transmit the user list along with data including the speech signal to the server 400, and determine whether the user who has uttered the speech is related to the user account logged in to the server 400 based on a result of processing the speech signal received from the server 400.

In addition, according to one aspect of the present disclosure, the result of processing the speech signal may include first user identification information related to the speech uttered by the user, and the controller 170 may determine whether the user who has uttered the speech is related to the user account logged in to the server 400 by comparing the first user identification information with second user identification information related to the user account logged in to the server 400.

In addition, according to one aspect of the present disclosure, the controller 170 may compare the first user identification information with the second user identification information based on being preset to use identification information related to speech with respect to the first user identification information, and generate the second response based on being preset not to use the identification information related to speech with respect to the first user identification information.

In addition, according to one aspect of the present disclosure, the controller 170 may log out of the user account logged in to the server 400 based on the user who has uttered the speech being unrelated to the user account logged in to the server 400 and log in to the user account related to the user who has uttered the speech.

In addition, according to one aspect of the present disclosure, the controller 170 may determine whether the speech uttered by the user requires identification of the user based on a result of performing natural language processing on the speech signal, determine whether the user who has uttered the speech is related to the user account logged in to the server 400 based on the speech uttered by the user requiring identification of the user, and generate the second response based on the speech uttered by the user not requiring identification of the user.

In addition, according to one aspect of the present disclosure, the electronic device 100 further includes the memory 140 that stores user histories of using the electronic device 100, and the controller 170 may determine that the speech uttered by the user requires identification of the user based on the speech uttered by the user being related to a command using a history stored in the memory, and determine that the speech uttered by the user does not require identification of the user based on the speech uttered by the user being unrelated to the command using a history stored in the memory 140.

In addition, according to one aspect of the present disclosure, the controller 170 may determine that the speech uttered by the user requires identification of the user based on the speech uttered by the user being related to a first application linked to the user account, and determine that the speech uttered by the user does not require identification of the user based on the speech uttered by the user being related to a second application not linked to the user account.

In addition, according to one aspect of the present disclosure, the controller 170 may determine whether the user who has uttered the speech is related to the user account logged in to the server 400 based on the speech uttered by the user being related to a first command requiring identification of the user and related to the user account while an application linked to the user account is executed, and generate the second response based on the speech uttered by the user being related to a second command different from the first command and requiring identification of the user.

Additionally, according to one aspect of the present disclosure, the indicator may include at least one of a name, a nickname, an icon, or a photo previously stored with respect to the user who has uttered the speech.

The system 10 according to one aspect of the present disclosure includes the electronic device 100 and the server 400, and the electronic device 100 transmits data including a speech signal related to speech uttered by a user to the server 400, determines whether the user who has uttered the speech is related to a user account logged in to the server 400 based on a result of processing the speech signal received from the server 400, outputs a first response including an indicator indicating the user who has uttered the speech through the display 160 based on the user who has uttered the speech being unrelated to the user account logged in to the server 400, and outputs a second response not including the indicator through the display 180 based on the user who has uttered the speech being related to the user account logged into the server 400, and the server 400 may generate identification information for the speech signal included in the data received from the electronic device 100, determine first identification information related to the identification information for the speech signal among identification information mapped to user identification information related to user accounts stored in the database 490 of the server 400, and transmit the result of processing the speech signal including first user identification information mapped to the first identification information to the electronic device 100.

Additionally, according to one aspect of the present disclosure, the electronic device 100 may store a user list including at least one user identification information related to a user account with a history of logging in to the server 400, and transmit the user list to the server 400 along with the data including the speech signal, and the server 400 may search the database 490 for user identification information related to the user list, and determine whether identification information mapped to the user identification information related to the user list is related to the identification information for the speech signal.

Additionally, according to one aspect of the present disclosure, the electronic device 100 may determine whether the user who has uttered the speech is related to the user account logged in to the server 400 by comparing the first user identification information with second user identification information related to the user account logged in to the server 400.

Additionally, according to one aspect of the present disclosure, the electronic device 100 may log out of the user account logged in to the server 400 based on the user who has uttered the speech being unrelated to the user account logged in to the server 400 and log in to the user account related to the user who has uttered the speech.

In addition, according to one aspect of the present disclosure, the server 400 may transmit a result of processing the speech signal, including a result of performing natural language processing on the speech signal, to the electronic device 100, and the electronic device 100 may determine whether the speech uttered by the user requires user identification based on the result of performing natural language processing, determine whether the user who has uttered the speech is related to the user account logged in to the server 400 based on the speech uttered by the user requiring identification of the user, and generate the second response based on the speech uttered by the user not requiring identification of the user.

The attached drawings are only for easy understanding of the embodiments disclosed in this specification, and the technical idea disclosed in this specification is not limited by the attached drawings, and all changes, equivalents, and changes included in the spirit and technical scope of the present disclosure are not limited thereby.

Meanwhile, the operating method of the present disclosure can be implemented as processor-readable code on a processor-readable recording medium. Processor-readable recording media include all types of recording devices that store data that can be read by a processor. Examples of processor-readable recording media include a ROM, a RAM, a CD-ROM, a magnetic tape, a floppy disk, and an optical data storage device, and also include those implemented in the form of a carrier wave, such as transmission through the Internet. Additionally, a processor-readable recording medium is distributed in a computer system connected to a network, and thus processor-readable code can be stored and executed in a distributed manner.

The effects of the electronic device and the system including the same according to the present disclosure will be described below.

According to at least one embodiment of the present disclosure, it is possible to register identification information on user voice in a user account.

According to at least one embodiment of the present disclosure, it is possible to identify a user based on user voice.

According to at least one embodiment of the present disclosure, it is possible to log in to a user account identified based on user voice.

According to at least one embodiment of the present disclosure, it is possible to accurately notify a user of switching of a logged-in user account.

Additional scope of applicability of the present disclosure will become apparent from the detailed description that follows. However, since various changes and modifications within the spirit and scope of the present disclosure may be clearly understood by those skilled in the art, the detailed description and specific embodiments such as preferred embodiments of the present disclosure should be understood as being given only as examples.

## Claims

**1.** An electronic device (100) comprising:

a display (180);
a network interface (135) configured to communicate with a server (400);
a user input interface (150) configured to receive speech uttered by a user; and
a controller (170) configured to:

determine whether the speech uttered by the user is related to a user account logged in to the server (400),
in response to determining the speech uttered by the user is unrelated to the user account logged in to the server (400), display a first response on the display (180) including an indicator indicating the user who has uttered the speech is not the user logged in to the user account, and
in response to determining the speech uttered by the user is related to the user account logged in to the server (400), display a second response on the display (180) indicating the user who uttered the speech is currently logged in to the server (400).

**2.** The electronic device (100) of claim 1, further comprising:

a memory (140) configured to store a user list including at least one piece of user identification information related to a user account with a history of logging in to the server (400),
wherein the controller (170) is further configured to:

transmit the user list to the server (400) along with data including the speech signal, and
determine the speech uttered by the user is related to the user account logged in to the server (400) based on a result of processing the speech signal received from the server (400).

**3.** The electronic device (100) of claim 2, wherein the result of processing the speech signal includes first user identification information related to the speech uttered by the user, and
wherein the controller (170) is further configured to determine the speech uttered by the user is related to the user account logged in to the server (400) by comparing the first user identification information with second user identification information related to the user account logged in to the server (400).

4. The electronic device (100) of claim 3, wherein the controller (170) is further configured to:

compare the first user identification information with the second user identification information based on the electronic device (100) being preset to use voice-related identification information with respect to the first user identification information, and
generate the second response based on the electronic device (100) being not preset to use the voice-related identification information with respect to the first user identification information.

5. The electronic device (100) of the preceding claims, wherein the controller (170) is further configured to:

log out of the user account logged in to the server (400) based on the speech uttered by the user being unrelated to the user account logged in to the server (400), and
log in to a user account related to the user who has uttered the speech.

6. The electronic device (100) of the preceding claims, wherein the controller (170) is further configured to:

determine whether the speech uttered by the user requires identification of the user based on a result of performing natural language processing on the speech uttered by the user,
determine whether the speech uttered by the user is related to the user account logged in to the server (400) based on the speech uttered by the user requiring the identification of the user, and
generate the second response based on the speech uttered by the user not requiring the identification of the user.

7. The electronic device (100) of claim 6, further comprising:

a memory (140) configured to store user histories of users using the electronic device (100),
wherein the controller (170) is further configured to:

determine the speech uttered by the user requires user identification based on the speech uttered by the user being related to a command the history stored in the memory (140), and
determine the speech uttered by the user does not require the user identification based on the speech uttered by the user being unrelated to the command using the history stored in the memory (140).

8. The electronic device (100) of claim 6, wherein the controller (170) is further configured to:

determine the speech uttered by the user requires user identification based on the speech uttered by the user being related to a first application linked to the user account, and
determine the speech uttered by the user does not require the user identification of the user based on the speech uttered by the user being related to a second application not linked to the user account.

9. The electronic device (100) of claim 6, wherein the controller (170) is further configured to:

execute an application linked to the user account,
determine whether the speech uttered by the user is related to the user account logged in to the server (400) based on the speech uttered by the user being related to a first command requiring the user identification and related to the user account, and
generate the second response based on the speech uttered by the user being related to a second command different from the first command and requiring the user identification.

10. The electronic device (100) of the preceding claims, wherein the indicator includes at least one of a name, a nickname, an icon, or a photo previously stored with respect to the user who has uttered the speech.

11. A system comprising:

a server (400); and

an electronic device (100) configured to:

receive speech uttered by a user,

transmit data including a speech signal related to the speed uttered by the user to the server (400),

receive information from the server (400) indicating whether the speech uttered by the user is related to a user account logged in to the server (400),

in response to the speech uttered by the user being unrelated to the user account logged in to the server (400), display a first response on a display (180) of the electronic device (100) including an indicator indicating the user who has uttered the speech is not the user logged in to the user account, and

in response to the speech uttered by the user is related to the user account logged in to the server (400), display a second response on the display (180) indicating the user who uttered the speech is currently logged in to the server (400),

wherein the server (400) is configured to:

generate identification information for the speech signal included in the data transmitted by the electronic device (100),

determine first identification information related to the identification information for the speech signal among identification information mapped to user identification information related to user accounts stored in a database of the server (400), and

transmit the result of processing the speech signal including first user identification information mapped to the first identification information to the electronic device (100).

12. The system of claim 11, wherein the electronic device (100) is configured to:

store a user list including at least one piece of user identification information related to a user account with a history of logging in to the server (400), and

transmit the user list to the server (400) along with the data including the speech signal, and

wherein the server (400) is configured to:

search the database for user identification information related to the user list, and

determine whether identification information mapped to the user identification information related to the user list is related to the identification information for the speech signal.

13. The system of claim 11 or 12, wherein the electronic device (100) is further configured to:

determine whether the speech uttered by the user is related to the user account logged in to the server (400) by comparing the first user identification information with second user identification information related to the user account logged in to the server (400).

14. The system of any one of claims 11 to 13, wherein the electronic device (100) is further configured to:

log out of the user account logged in to the server (400) based on the speech uttered by the user being unrelated to the user account logged in to the server (400), and

log in to the user account related to the user who has uttered the speech.

15. The system of any one of claims 11 to 14, wherein the server (400) is further configured to:

transmit a result of processing the speech signal, including a result of performing natural language processing on the speech signal, to the electronic device (100), and

wherein the electronic device (100) is further configured to:

determine whether the speech uttered by the user requires user identification based on the result of performing natural language processing,

determine whether the speech uttered by the user is related to the user account logged in to the server (400) based on the speech uttered by the user requiring identification of the user, and

generate the second response based on the speech uttered by the user not requiring identification of the user.

FIG. 1

FIG. 2

100

105

140 STORAGE

110 TUNER → 120 DEMODULATOR

170 CONTROLLER

135 NETWORK INTERFACE

130 EXTERNAL DEVICE INTERFACE

160 INPUT PART

180 DISPLAY

185 AUDIO OUTPUT PART

190 POWER SUPPLY

150 USER INPUT INTERFACE

200 REMOTE CONTROL DEVICE

EP 4 600 804 A1

FIG. 3

FIG. 4

400

FIG. 5

—510

—520

FIG. 6

170

```
┌─────────────────────────┐
│   ┌──────────────┐       │
│   │  STT ENGINE  │───────┼── 610
│   └──────────────┘       │
│          ↓               │
│   ┌──────────────┐       │
│   │  NLP ENGINE  │───────┼── 620
│   └──────────────┘       │
│          ↓               │
│ ┌───────────────────┐    │
│ │      SPEECH       │────┼── 630
│ │    SYNTHESIS      │    │
│ │      ENGINE       │    │
│ │ ┌───────────────┐ │    │
│ │ │ PREPROCESSING │─┼────┼── 640
│ │ │    ENGINE     │ │    │
│ │ └───────────────┘ │    │
│ │        ↓          │    │
│ │ ┌───────────────┐ │    │
│ │ │  TTS ENGINE   │─┼────┼── 650
│ │ └───────────────┘ │    │
│ └───────────────────┘    │
└─────────────────────────┘
```

FIG. 7

START

S701 LOG IN TO ACCOUNT?

S702 HAS VOICE ID BEEN REGISTERED?

S703 START VOICE ID REGISTRATION

S704 OUTPUT TEXT

S705 SPEECH INPUT?

S706 TRANSMIT SPEECH DATA

S707 IS SPEECH PROCESSING SUCCESSFUL?

S709 IS PROCESSING OF ALL TEXT COMPLETED?

S708 IS SPEECH INPUT REATTEMPTED?

S710 COMPLETE VOICE ID REGISTRATION

END

FIG. 8

FIG. 9

900

VOICE ID MANAGEMENT
YOU CAN REGISTER A NEW VOICE OR DELETE IT.

YOU ARE NOT LOGGED IN.

PLEASE LOG IN TO REGISTER AND MANAGE YOUR VOICE ID.

LOG IN

910    920

205

FIG. 10

1000

VOICE ID MANAGEMENT
YOU CAN REGISTER A NEW VOICE OR DELETE IT.

THERE IS NO REGISTERED VOICE ID.

* WHEN REGISTERING YOUR VOICE,
  YOU CAN USE VOICE ID TO EASILY LOG IN.

REGISTER VOICE ID

Henry
Henry@xxx_com

1020

1010

205

## FIG. 11

1100

VOICE ID MANAGEMENT
YOU CAN REGISTER A NEW VOICE OR DELETE IT.

X

USE VOICE ID FUNCTION ON THIS TV

1140

VOICE ID HAS BEEN REGISTERED

| REGISTER AGAIN | DELETE |

Henry
Henry@xxx_com

1120    1130

205

1110

## FIG. 12

1200

⟨ Exit

✓  2  3

REGISTER VOICE ID

TRAIN LG ThinQ to recognize your voice.
If you register your Voice ID in your account.
you will automatically log in to your account and
be provided with tailored content and services.

- For accurate recognition,
  please minimize surrounding noise and start registration.
- When using Voice ID,
  password entry is omitted during account switching step.
- A person with a similar voice may be able to unlock it,
  and if your voice is different due to health reasons
  or other reasons. it may not be recognized well.

Start

1210

205

FIG. 13

1300

1   ✓   3
REGISTER VOICE ID
Press the voice recording button
and speak the sentence displayed on the screen.

search for the programs scheduled
for today at 7 PM.

1301

1/6

1302

205

< Back

Exit          Record Voice

1310          1320

FIG. 14

```
          ┌─────────┐
          │  START  │
          └────┬────┘
               │
               ▼
   ┌───────────────────────┐
   │   CONNECT TO SERVER    │────S1401
   └───────────┬───────────┘
               │
               ▼
   ┌───────────────────────┐
   │    RECEIVE SPEECH      │────S1402
   └───────────┬───────────┘
               │
               ▼
   ┌───────────────────────┐
   │ TRANSMIT SPEECH DATA   │────S1403
   └───────────┬───────────┘
               │
               ▼
   ┌───────────────────────┐
   │   RECEIVE SPEECH       │────S1404
   │  PROCESSING RESULT     │
   └───────────┬───────────┘
               │
               ▼          S1405
          ◇ DOES
           SPEECH
         REQUIRE USER     N
        IDENTIFICATION? ─────┐
               │ Y           │
               ▼             │
   ┌───────────────────────┐ │
   │  GENERATE RESPONSE     │────S1406
   │   RELATED TO USER      │ │
   └───────────┬───────────┘ │
               │◄────────────┘
               ▼
   ┌───────────────────────┐
   │  PERFORM OPERATION     │────S1407
   │   BASED ON SPEECH      │
   └───────────┬───────────┘
               │
               ▼
          ┌─────────┐
          │   END   │
          └─────────┘
```

FIG. 15

S1406  ( START )

S1501
USER FOR WHOM USE OF VOICE ID IS SET? —N→

Y

S1502
CURRENTLY LOGGED-IN USER ACCOUNT? —Y→

N

S1503
IS ACCOUNT SWITCHING REQUIRED? —N→

Y

SWITCH USER ACCOUNT — S1504

GENERATE FIRST RESPONSE INCLUDING USER INDICATOR — S1506

S1505
IS RESPONSE INCLUDING USER INDICATOR REQUIRED?

Y

N

GENERATE SECOND RESPONSE INCLUDING NO USER INDICATOR — S1507

OBTAIN USER INFORMATION — S1508

( END )

FIG. 16

1600

CONNECT TO MY ACCOUNT

1610

FIG. 17A

1600

You must register your Voice ID to use related functions.
Please register your Voice ID and try again.

YouTube

<1701>    1710

1600

You must activate your Voice ID to use related functions.
Please activate your Voice ID and try again.

YouTube

<1702>    1720

FIG. 17B

1600

YOU ARE CURRENTLY LOGGED IN.

YouTube

<1703>    1730

1600

SWITCH TO HENRY'S ACCOUNT

YouTube

<1704>    1740

FIG. 18

1800

1810 1820

1830

Joy Henry

FIG. 19

1900

Henry

6:54 pm

Wednesday (GMT+9), June 5,
2020 Seocho-gu, Seoul

24° 17°

FIG. 20

1600

RUN THE HOME FITNESS APP.

YouTube

2010

FIG. 21

1600

YES, I WILL RUN
THE HOME FITNESS APP.

YouTube

<2101>    2110

1600

YES HENRY, I WILL RUN
THE HOME FITNESS APP.

YouTube

<2102>    2120

FIG. 22

<2201>

<2202>

FIG. 23

1600

2310

FIG. 24

choose the content you like

<2401>

Henry, choose the content you like.

<2402>

FIG. 25

2200

playlist

guess whose voice is

<2501>

2510

2200

playlist

O.

You're Joy, right?
Did you think I didn't know?

<2502>

2520

FIG. 26

FIG. 27

2710    1600

<2701>

1600

2720

<2702>

FIG. 28

1600

2810

FIG. 29

Which device would you like to connect?

G7 ThinQ    V50S ThinQ

<2901>

please select home appliances

connectable home appliances>

stand air conditioner    air cleaner    styler

select directly

home appliances

washing machine    dryer    styler    vacuum cleaner

TV    refrigerator    Kimchi refrigerator    wine cellar

<2902>

Europäisches
Patentamt

European
Patent Office

Office européen
des brevets

# EUROPEAN SEARCH REPORT

**Application Number**

EP 24 22 2761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/093110 A1 (KIM YOON [US] ET AL) 24 March 2022 (2022-03-24) * figures 9A-C, 15A-E * * paragraph [0278] - paragraph [0282] * * paragraph [0317] - paragraph [0326] * | 1-15 | INV. G06F3/16 |
| A | US 2021/097158 A1 (LEE BORAM [KR] ET AL) 1 April 2021 (2021-04-01) * figures 6-10 * * paragraph [0085] - paragraph [0097] * | 1-15 | |
| A | US 2018/308472 A1 (LOPEZ MORENO IGNACIO [US] ET AL) 25 October 2018 (2018-10-25) * figures 1A-5 * * paragraph [0034] - paragraph [0090] * | 1-15 | |
| A | US 2022/020380 A1 (PARK JUNYONG [KR] ET AL) 20 January 2022 (2022-01-20) * figures 8A-10 * * paragraph [0095] - paragraph [0106] * | 1-15 | |
| A | US 2020/380972 A1 (CARRIGAN TAYLOR G [US] ET AL) 3 December 2020 (2020-12-03) * figures 6A-7C * * paragraph [0229] - paragraph [0255] * | 1-15 | **TECHNICAL FIELDS SEARCHED (IPC)** G06F |

The present search report has been drawn up for all claims

| Place of search | Date of completion of the search | Examiner |
|---|---|---|
| The Hague | 25 March 2025 | Melis, Federico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 2761

25-03-2025

| Patent document cited in search report | | Publication date | Patent family member(s) | | Publication date |
|---|---|---|---|---|---|
| US 2022093110 | A1 | 24-03-2022 | DK | 201770434 A1 | 04-12-2018 |
| | | | DK | 201770435 A1 | 14-12-2018 |
| | | | DK | 201870504 A1 | 04-12-2018 |
| | | | KR | 20200039030 A | 14-04-2020 |
| | | | US | 2018336905 A1 | 22-11-2018 |
| | | | US | 2019172467 A1 | 06-06-2019 |
| | | | US | 2022093110 A1 | 24-03-2022 |
| | | | US | 2025069605 A1 | 27-02-2025 |
| US 2021097158 | A1 | 01-04-2021 | KR | 20190087798 A | 25-07-2019 |
| | | | US | 2021097158 A1 | 01-04-2021 |
| | | | WO | 2019143022 A1 | 25-07-2019 |
| US 2018308472 | A1 | 25-10-2018 | CN | 110603584 A | 20-12-2019 |
| | | | CN | 117577099 A | 20-02-2024 |
| | | | EP | 3485492 A1 | 22-05-2019 |
| | | | EP | 3905241 A1 | 03-11-2021 |
| | | | EP | 4293661 A2 | 20-12-2023 |
| | | | KR | 20190113927 A | 08-10-2019 |
| | | | KR | 20210134821 A | 10-11-2021 |
| | | | KR | 20220148319 A | 04-11-2022 |
| | | | KR | 20240008405 A | 18-01-2024 |
| | | | US | 2018308472 A1 | 25-10-2018 |
| | | | US | 2018308491 A1 | 25-10-2018 |
| | | | US | 2020082812 A1 | 12-03-2020 |
| | | | US | 2020118550 A1 | 16-04-2020 |
| | | | US | 2021343276 A1 | 04-11-2021 |
| | | | US | 2022148577 A1 | 12-05-2022 |
| | | | US | 2023335116 A1 | 19-10-2023 |
| | | | WO | 2018195185 A1 | 25-10-2018 |
| US 2022020380 | A1 | 20-01-2022 | KR | 20200116654 A | 13-10-2020 |
| | | | US | 2022020380 A1 | 20-01-2022 |
| | | | WO | 2020204357 A1 | 08-10-2020 |
| US 2020380972 | A1 | 03-12-2020 | AU | 2020285521 A1 | 06-01-2022 |
| | | | AU | 2022203561 A1 | 16-06-2022 |
| | | | AU | 2023201189 A1 | 06-04-2023 |
| | | | AU | 2023274186 A1 | 21-12-2023 |
| | | | CN | 113924618 A | 11-01-2022 |
| | | | CN | 114333820 A | 12-04-2022 |
| | | | CN | 116401646 A | 07-07-2023 |
| | | | CN | 117935805 A | 26-04-2024 |
| | | | CN | 117935806 A | 26-04-2024 |
| | | | EP | 3957055 A1 | 23-02-2022 |
| | | | EP | 4307101 A2 | 17-01-2024 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 22 2761

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | | Publication date |
|---|---|---|---|---|
| | | JP | 7133106 B2 | 07-09-2022 |
| | | JP | 7198382 B1 | 28-12-2022 |
| | | JP | 7308345 B2 | 13-07-2023 |
| | | JP | 7430839 B2 | 13-02-2024 |
| | | JP | 7637808 B2 | 28-02-2025 |
| | | JP | 2022531984 A | 12-07-2022 |
| | | JP | 2023004995 A | 17-01-2023 |
| | | JP | 2023051976 A | 11-04-2023 |
| | | JP | 2023139016 A | 03-10-2023 |
| | | JP | 2024059635 A | 01-05-2024 |
| | | KR | 20220004223 A | 11-01-2022 |
| | | KR | 20220082935 A | 17-06-2022 |
| | | KR | 20240010754 A | 24-01-2024 |
| | | KR | 20240152416 A | 21-10-2024 |
| | | US | 10802843 B1 | 13-10-2020 |
| | | US | 2020380972 A1 | 03-12-2020 |
| | | US | 2021019156 A1 | 21-01-2021 |
| | | US | 2022357964 A1 | 10-11-2022 |
| | | US | 2023315495 A1 | 05-10-2023 |
| | | WO | 2020242577 A1 | 03-12-2020 |

EPO FORM P0459

For more details about this annex : see Official Journal of the European Patent Office, No. 12/82

page 2 of 2